(19) Europäisches Patentamt
European Patent Office
Office européen des brevets

(11) **EP 4 072 133 A1**

(12) **EUROPEAN PATENT APPLICATION**
published in accordance with Art. 153(4) EPC

(43) Date of publication:
**12.10.2022 Bulletin 2022/41**

(21) Application number: **20912697.8**

(22) Date of filing: **25.11.2020**

(51) International Patent Classification (IPC):
**H04N 19/115** *(2014.01)* **H04N 19/132** *(2014.01)*
**H04N 19/164** *(2014.01)* **H04N 19/172** *(2014.01)*
**H04N 19/587** *(2014.01)* **H04N 21/2343** *(2011.01)*
**H04N 21/24** *(2011.01)*

(52) Cooperative Patent Classification (CPC):
**H04N 19/115; H04N 19/132; H04N 19/164;**
**H04N 19/172; H04N 19/587; H04N 21/2343;**
**H04N 21/24**

(86) International application number:
**PCT/JP2020/043894**

(87) International publication number:
**WO 2021/140768 (15.07.2021 Gazette 2021/28)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.01.2020 JP 2020002068**

(71) Applicant: **Sony Group Corporation**
**Tokyo 108-0075 (JP)**

(72) Inventors:
• **YAMASHITA, Kei**
**Tokyo 108-0075 (JP)**
• **FUCHIE, Takaaki**
**Tokyo 108-0075 (JP)**
• **KURE, Yoshinobu**
**Tokyo 108-0075 (JP)**

(74) Representative: **D Young & Co LLP**
**120 Holborn**
**London EC1N 2DY (GB)**

(54) **TRANSMISSION DEVICE AND TRANSMISSION METHOD**

(57) A transmission apparatus includes a video encoder that encodes each piece of frame data of an image, and a transmission processing unit. During the transmission processing of image data encoded by the video encoder, the transmission processing unit performs rate decrease control on an encoding rate in the video encoder according to the transmission delay to the reception-side device, and executes delay decrease processing of decreasing the delay amount of the transmission data for the frame data of one or a plural number of target frames.

*FIG. 6*

**Description**

TECHNICAL FIELD

The present technology relates to a transmission apparatus and a transmission method, and particularly to a technical field for improving a transmission delay of a video stream.

BACKGROUND ART

In the field of data transmission such as video streaming, countermeasures in a case where a transmission error occurs and improvement of a decrease in a transmission rate, the resulting transmission delay, and the like have been studied.
Patent Document 1 below discloses a technique for ensuring reproduction with sufficient image quality on the reception side and stable transmission even when the transmission rate decreases.

CITATION LIST

PATENT DOCUMENT

Patent Document 1: Japanese Patent Application Laid-Open No. 2003-23639

SUMMARY OF THE INVENTION

PROBLEMS TO BE SOLVED BY THE INVENTION

In recent years, a transmission/reception system capable of more large-capacity and high-speed transmission by a communication system such as 5th generation mobile communication system (5G) and performing low-delay video streaming has also been developed.
However, with an increase in the amount of transmission data and an increase in network load due to high definition of an image or the like, the problem of transmission delay is still in a situation where improvement is needed.
The transmission delay has various factors such as a transmission delay when the transmission rate (transmission data rate) decreases, a network delay, a codec/buffering delay on the reception side, and a decoding delay, but the transmission delay when the transmission rate decreases is a relatively large factor.
Therefore, an object of the present disclosure is to improve a transmission delay when the transmission rate decreases.

SOLUTIONS TO PROBLEMS

A transmission apparatus according to the present technology includes: a video encoder that performs encoding for each piece of frame data of an image; and a transmission processing unit that performs rate decrease control on an encoding rate in the video encoder during transmission processing of image data encoded by the video encoder and executes delay decrease processing of decreasing a delay amount of transmission data for frame data of one or a plural number of target frames.
For example, in a case where a transmission delay or a packet loss occurs due to network congestion in image data transmission such as video streaming, delay decrease processing of decreasing a transmission rate to cope with the transmission delay or packet loss and discarding a part of frame data of image data to be transmitted so that no delay occurs (or at least the delay is decreased) is executed.
Note that, in the present disclosure, "frame data" refers to image data in units of one frame.
With the transmission apparatus according to the present technology described above, it is conceivable that the transmission processing unit transmits an encoding rate decrease request and the number of target frames of the delay decrease processing to the video encoder, and the video encoder decreases the encoding rate in response to the encoding rate decrease request and performs processing of not outputting the frame data of the number of target frames to the transmission processing unit as the delay decrease processing.
That is, the delay decrease processing is executed on the video encoder side. For example, when the encoding rate is decreased in the video encoder, the frame data of the instructed number of target frames is discarded in the video encoder so as not to be output to the transmission processing unit.
With the transmission apparatus according to the present technology described above, it is conceivable that the video encoder performs, as the delay decrease processing, processing of not encoding but discarding frame data input for an instructed number of target frames.

In response to receiving the encoding rate decrease request, the video encoder discards the frame data of the number of target frames input thereafter without encoding as it is, so that the encoded frame data is not supplied to the transmission processing unit as a result.

With the transmission apparatus according to the present technology described above, it is conceivable that the video encoder performs encoding on frame data to be first output to the transmission processing unit after a target frame of the delay decrease processing such that frame data that is a frame before the target frame of the delay decrease processing and has been output to the transmission processing unit is a reference destination of inter-frame reference.

For example, a case where the video encoder is an encoder of the moving image compression standard that is the H.264 standard or the H.265 standard and performs inter-frame reference is assumed. In this case, for example, the frame data output to the transmission processing unit after discarding one or a plurality of target frames as the delay decrease processing is assumed to have the frame data already output to the transmission processing unit as a reference destination.

With the transmission apparatus according to the present technology described above, it is conceivable that the video encoder encodes frame data to be first output to the transmission processing unit after a target frame of the delay decrease processing such that frame data last output to the transmission processing unit before the delay decrease processing is a reference destination of inter-frame reference.

For example, the frame data output to the transmission processing unit after discarding one or a plurality of target frames as the delay decrease processing is assumed to have the frame data of the frame immediately before the frame to be discarded as a reference destination.

With the transmission apparatus according to the present technology described above, it is conceivable that a time stamp value of frame data first output to the transmission processing unit after a target frame of the delay decrease processing by the video encoder is a value advanced by {(number of target frames of delay decrease processing) + 1} $\times$ (frame interval time) from a time stamp value of frame data last output to the transmission processing unit before the delay decrease processing.

That is, the frame after the delay decrease processing corresponds to the time when the time corresponding to the number of target frames of the delay decrease processing has elapsed from the frame before the delay decrease processing.

With the transmission apparatus according to the present technology described above, it is conceivable that in a case where a number of frames output from the video encoder from a time point at which the transmission processing unit determines to decrease the encoding rate until the video encoder can output first frame data encoded accordingly is N (N is a positive number), and a ratio between a new encoding rate and an old encoding rate related to rate decrease is 1 : R, the number of target frames is equal to or greater than ceiling$((R - 1) \times N)$.

The number of target frames is calculated by a round-up value obtained by ceiling$((R - 1) \times N)$ using the ceiling function.

With the transmission apparatus according to the present technology described above, it is conceivable that the video encoder performs processing of outputting frame data including reference information and not including image data for an instructed number of target frames as the delay decrease processing.

For example, the frame data called a skip frame including reference information but not including data of the image itself is supplied to the transmission processing unit.

With the transmission apparatus according to the present technology described above, it is conceivable that the transmission processing unit transmits an encoding rate decrease request to the video encoder, the video encoder decreases the encoding rate in response to the encoding rate decrease request, and the transmission processing unit performs processing of not transmitting to a reception-side device but discarding the frame data of the number of target frames among the frame data output from the video encoder as the delay decrease processing.

That is, the delay decrease processing is executed on the transmission processing unit side. The transmission processing unit decreases the encoding rate of the video encoder by transmission delay or the like, and discards the frame data of the number of target frames among the input encoded frame data without transmitting the frame data to the reception-side device.

With the transmission apparatus according to the present technology described above, it is conceivable that the video encoder adds rate change information to frame data to be first encoded after a change in encoding rate, and the transmission processing unit discards the frame data input from the video encoder before the frame data to which the rate change information is added is input after the transmission of the encoding rate decrease request.

The video encoder adds the rate change information so that the transmission processing unit can determine the frame data after a change in encoding rate.

With the transmission apparatus according to the present technology described above, it is conceivable that the transmission processing unit transmits frame identification information of frame data already transmitted to the reception-side device before execution of the delay decrease processing to the video encoder, and the video encoder performs encoding on the frame data to be first output to the transmission processing unit after the encoding rate is decreased in response to the encoding rate decrease request such that frame data indicated by the frame identification information is a reference destination of inter-frame reference.

For example, in a case where the video encoder is an encoder of the moving image compression standard that performs inter-frame compression (interframe compression) that performs inter-frame reference in the H.264 standard, the H.265 standard, or the like, in a case where the transmission processing unit discards the target frame as the delay decrease processing, it is assumed that frame data to be first encoded at a new rate by the video encoder has frame data that has already been transmitted to the reception-side device by the transmission processing unit as a reference destination.

With the transmission apparatus according to the present technology described above, it is conceivable that the frame identification information includes frame identification information of last frame data transmitted to the reception-side device before execution of the delay decrease processing.

That is, in a case where the transmission processing unit discards one or a plurality of target frames as the delay decrease processing, encoding is performed such that the frame data transmitted to the reception-side device immediately before the frame data to be discarded is a reference destination.

With the transmission apparatus according to the present technology described above, it is conceivable that a time stamp value of frame data first transmitted after a target frame of the delay decrease processing by the transmission processing unit is a value advanced by {(number of target frames of delay decrease processing) + 1} × (frame interval time) from a time stamp value of frame data last transmitted before the delay decrease processing.

That is, the frame after the delay decrease processing is the time when the time corresponding to the number of target frames of the delay decrease processing has elapsed from the frame before the delay decrease processing.

With the transmission apparatus according to the present technology described above, it is conceivable that in a case where the frame data indicated by the frame identification information cannot be the reference destination of the inter-frame reference, the video encoder performs encoding such that the frame data to be first output to the transmission processing unit after the encoding rate is decreased in response to the encoding rate decrease request is an IDR frame.

For example, in a case where the video encoder is an encoder that performs inter-frame compression that performs inter-frame reference according to the H.264 standard or the H.265 standard as described above, frame data to be first encoded at a new rate is an instant decoder refresh (IDR) frame.

With the transmission apparatus according to the present technology described above, it is conceivable that the video encoder sets the encoding rate to be lower than a rate designated by the encoding rate decrease request and suppresses a data size of the IDR frame to be transmitted within a predetermined maximum size.

The data size is made to fall within a predetermined maximum size in the first IDR frame after the rate change.

With the transmission apparatus according to the present technology described above, it is conceivable that the video encoder includes memory that can temporarily store encoded frame data, and the frame data to be first output to the transmission processing unit after the encoding rate is decreased in response to the encoding rate decrease request is encoded using the frame data stored in the memory as a reference destination.

When the video encoder includes the memory that stores the frame data for a certain period of time after encoding, it is possible to refer to frame data of several frames before that has been transmitted without being discarded.

With the transmission apparatus according to the present technology described above, it is conceivable that the video encoder periodically outputs a long-time reference frame, and the frame data to be first output to the transmission processing unit after the encoding rate is decreased in response to the encoding rate decrease request is encoded using the long-time reference frame as a reference destination.

The video encoder periodically outputs a long-time reference frame, a so-called long term reference (LTR) frame. In this case, the LTR frame is set as a reference destination.

With the transmission apparatus according to the present technology described above, it is conceivable that in a case where the long-time reference frame is determined to be discarded by the transmission processing unit, the video encoder sets, as an IDR frame, frame data to be first output to the transmission processing unit after the encoding rate is decreased in response to the encoding rate decrease request.

That is, in a case where the LTR frame is to be discarded, the video encoder sets the first frame after the rate change as the IDR frame because it is not appropriate to set the LTR frame as the reference destination.

With the transmission apparatus according to the present technology described above, it is conceivable that the video encoder sets the encoding rate to be lower than a rate designated by the encoding rate decrease request and suppresses a data size of the IDR frame to be transmitted within a predetermined maximum size.

The data size is made to fall within a predetermined maximum size in the first IDR frame after the rate change.

In a transmission method according to the present technology, a transmission apparatus includes: performing rate decrease control on an encoding rate in a video encoder during transmission processing of image data encoded by the video encoder and executing delay decrease processing of decreasing a delay amount of transmission data for frame data of one or a plural number of target frames.

This improves a transmission delay on the transmission apparatus side.

BRIEF DESCRIPTION OF DRAWINGS

Fig. 1 is an explanatory diagram of an imaging apparatus, which is a transmission-side device, and a reception-side device of an embodiment of the present technology.

Fig. 2 is a block diagram of an imaging apparatus of an embodiment.

Fig. 3 is an explanatory diagram of a transmission unit of an embodiment.

Fig. 4 is an explanatory diagram of processing at the time of video streaming transmission of an embodiment.

Fig. 5 is an explanatory diagram of a transmission delay of a comparative example.

Fig. 6 is an explanatory diagram of rate decrease and delay decrease processing according to a first embodiment.

Fig. 7 is a flowchart of processing of a packet transmission module of the first embodiment.

Fig. 8 is a flowchart of processing of a video encoder of the first embodiment.

Fig. 9 is an explanatory diagram of rate decrease and delay decrease processing according to a second embodiment.

Fig. 10 is an explanatory diagram of encoded data of a third embodiment.

Fig. 11 is an explanatory diagram of rate decrease and delay decrease processing according to the third embodiment.

Fig. 12 is an explanatory diagram of rate decrease and delay decrease processing according to the third embodiment.

Fig. 13 is a flowchart of processing of a packet transmission module of the third embodiment.

Fig. 14 is a flowchart of processing of a video encoder of the third embodiment.

Fig. 15 is an explanatory diagram of transmission of an LTR frame.

Fig. 16 is an explanatory diagram of rate decrease and delay decrease processing according to a fourth embodiment.

Fig. 17 is a flowchart of processing of a video encoder of the fourth embodiment.

MODE FOR CARRYING OUT THE INVENTION

Embodiments will be described below in the following order.

<1. Apparatus configuration>
<2. Comparative example>
<3. First embodiment>
<4. Second embodiment>
<5. Third embodiment>
<6. Fourth embodiment>
<7. Summary and variation example>

<1. Apparatus configuration>

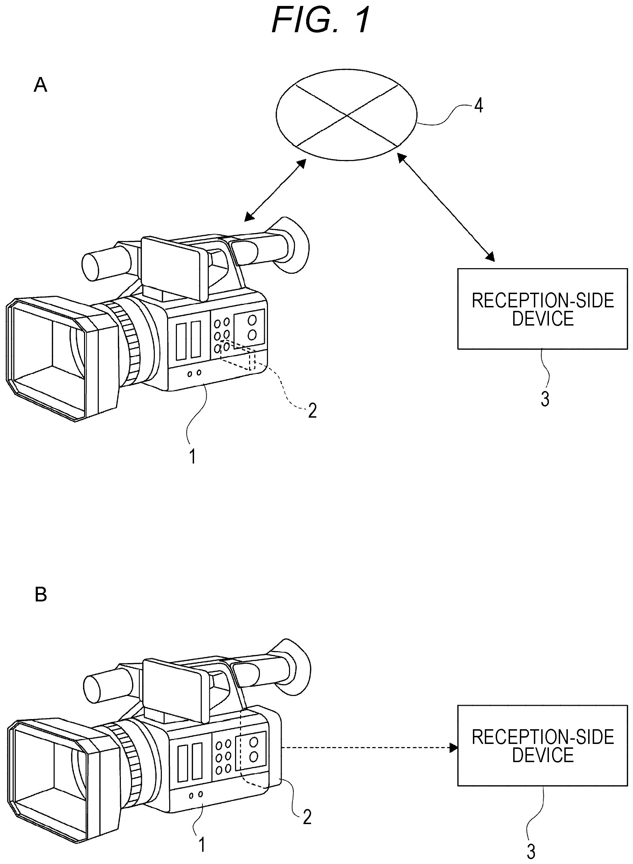

An apparatus configuration example of embodiments will be described. Figs. 1A and 1B both illustrate an imaging apparatus 1, which is a transmission-side device, and a reception-side device 3.

The imaging apparatus 1 is a so-called digital video camera for business use or consumer use. Alternatively, the imaging apparatus may be a portable terminal apparatus such as a so-called digital still camera, a smartphone, or a tablet terminal, and may be a device capable of capturing a moving image.

The imaging apparatus 1 can perform network communication by a communication system such as 5G, for example, by attaching a separate transmission unit 2 as illustrated in Fig. 1B or incorporating the transmission unit 2 as illustrated in Fig. 1A. In particular, in the present embodiments, it is assumed that the imaging apparatus 1 can perform video streaming transmission via image data of consecutive frames, which is a captured moving image, and the transmission unit 2.

The transmission unit 2 or the imaging apparatus 1 incorporating the transmission unit 2 corresponds to the transmission apparatus of the present disclosure.

The imaging apparatus 1 performs video streaming transmission to the reception-side device 3 via, for example, a network 4.

As the network 4, for example, the Internet, a home network, a local area network (LAN), a satellite communication network, and various other networks are assumed.

Various devices are assumed as the reception-side device 3. For example, a cloud server, a network distribution server, a video server, a video editing apparatus, a video reproducing apparatus, a video recording apparatus, a television apparatus, or an information treatment apparatus such as a personal computer or a portable terminal having a video processing function equivalent thereto is assumed.

Note that, in Fig. 1A, the imaging apparatus 1 and the reception-side device 3 perform network communication via the network 4, but as illustrated in Fig. 1B, a configuration in which the imaging apparatus 1 directly transmits video stream data to the reception-side device 3 by wireless transmission such as near-field wireless communication or the like is also conceivable.

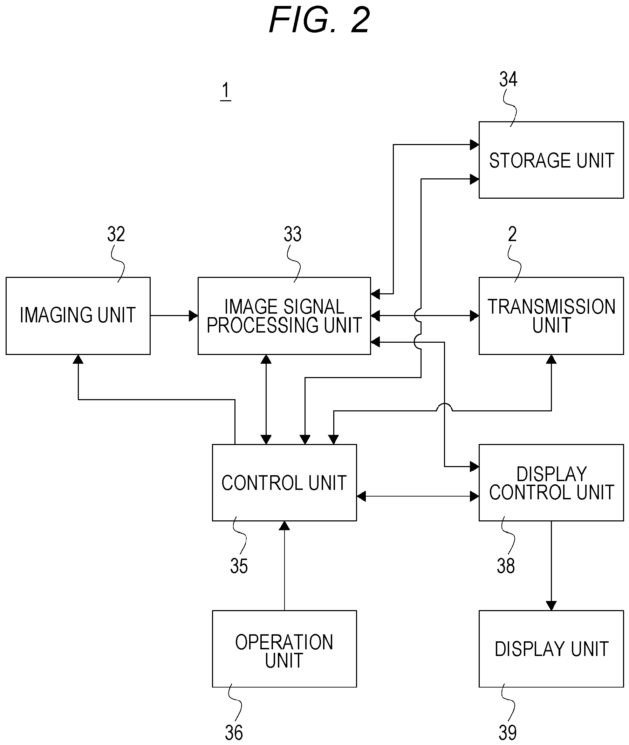

Fig. 2 illustrates a configuration of the imaging apparatus 1. Note that although Fig. 2 illustrates an example in which the imaging apparatus 1 incorporates the transmission unit 2, the transmission unit 2 may be a separate body as described above.

The imaging apparatus 1 includes an imaging unit 32, an image signal processing unit 33, a storage unit 34, a control unit 35, an operation unit 36, a display control unit 38, a display unit 39, and the transmission unit 2.

The imaging unit 32 includes an imaging optical system and an image sensor for imaging. The image sensor is, for example, an imaging element such as a charge coupled device (CCD) sensor, a complementary metal oxide semiconductor (CMOS) sensor, or the like, receives light from a subject incident through the imaging optical system, converts the light into an electrical signal, and outputs the electrical signal. For the electrical signal obtained by performing photoelectric conversion on the received light, the image sensor executes, for example, correlated double sampling (CDS) processing, automatic gain control (AGC) processing, and the like, and further performs analog/digital (A/D) conversion processing. Then, image data, which is digital data, is output to the image signal processing unit 33, which is a subsequent stage.

The image signal processing unit 33 is configured as an image processing processor by, for example, a digital signal processor (DSP) or the like. The image signal processing unit 33 performs various types of processing on the image data input from the imaging unit 32.

For example, in a case where an image signal is assumed as a normal visible light image, the image signal processing unit 33 performs clamp processing of clamping black levels of red (R), green (G), and blue (B) to a predetermined signal level, correction processing between color channels of R, G, and B, color separation processing (demosaic processing in a case where a mosaic color filter such as a Bayer filter is used) of causing image data for each pixel to have all color components of R, G, and B, processing of generating (separating) a luminance (Y) signal and a color (C) signal, and the like.

Moreover, there is also a case where the image signal processing unit 33 executes necessary resolution conversion processing, for example, resolution conversion for storage, communication output, or monitor image, on the image signal subjected to various types of signal processing.

Furthermore, there is also a case where the image signal processing unit 33 performs, for example, compression encoding processing for storage or the like on the resolution-converted image data.

The control unit 35 is configured by a microcomputer (arithmetic processing apparatus) including a central processing unit (CPU), read only memory (ROM), random access memory (RAM), flash memory, and the like.

The CPU executes a program stored in the ROM, the flash memory, and the like to generally control the entire imaging apparatus 1.

The RAM, as a work region when the CPU processes various data, is used for temporarily storing data, programs, and the like.

The ROM and the flash memory (nonvolatile memory) are used to store application programs, firmware, and the like for various operations in addition to an operating system (OS) for the CPU to control each unit and content files such as image files.

Such a control unit 35 performs control related to an imaging operation such as a shutter speed, exposure adjustment, and a frame rate in the imaging unit 32, control such as parameter control of various signal processing in the image signal processing unit 33, and the like. Furthermore, the control unit 35 performs setting processing, imaging operation control, display operation control, and the like according to a user's operation.

The operation unit 36 is assumed to be an operator such as a key, a switch, a dial, or the like, or a touch panel provided on the housing of the apparatus. The operation unit 36 sends a signal corresponding to the input operation to the control unit 35.

The display unit 39 is a display unit that performs various displays with respect to a user (imaging person or the like) and includes, for example, a display device such as a liquid crystal display (LCD), an organic electro luminescence (EL) display, or the like.

The display control unit 38 performs processing of executing a display operation on the display unit 39. For example, a character generator, a display driver, and the like are included, and various displays are executed on the display unit 39 on the basis of the control of the control unit 35. For example, a through image or a still image or a moving image recorded on a recording medium is reproduced and displayed, or various operation menus, icons, messages, or the like, that is, display as a graphical user interface (GUI) is executed on a screen.

The storage unit 34 includes, for example, nonvolatile memory, and stores image files such as still image data and moving image data captured by the imaging unit 32, the attribute information of an image file, thumbnail images, and the like.

Various practical modes of the storage unit 34 are conceivable. For example, the storage unit 34 may be flash memory built in the imaging apparatus 1 or may be in the form of a memory card that can be attached to and detached from the imaging apparatus 1 (for example, a portable flash memory) and a card recording/reproduction unit that performs recording/reproduction access to the memory card. Furthermore, the storage unit 34 may be achieved as a hard disk drive (HDD) or the like as a form built in the imaging apparatus 1.

The transmission unit 2 is a unit that performs streaming transmission of the captured image data (moving image) as described above.

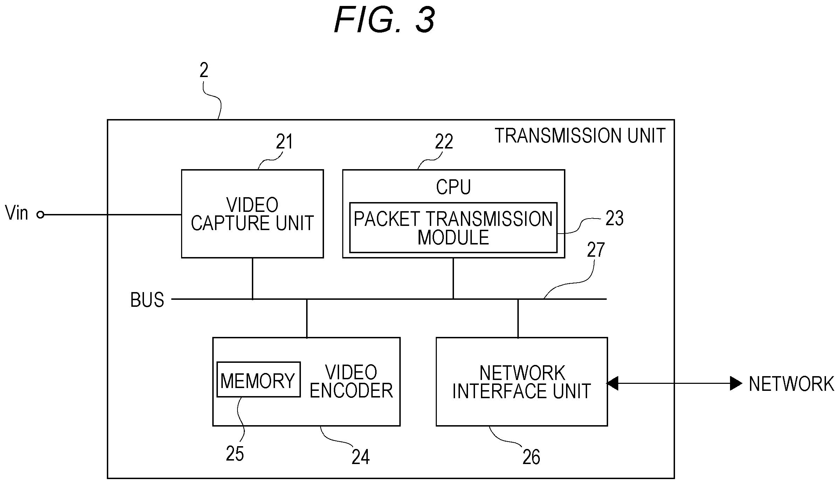

A configuration of the transmission unit 2 is illustrated in Fig. 3. The transmission unit 2 includes a video capture unit 21, a CPU 22, a packet transmission module 23, a video encoder 24, memory 25, and a network interface unit 26.

For example, image data (frame data) Vin of each frame processed by the image signal processing unit 33 is input to the video capture unit 21. For example, uncompressed frame data is input at predetermined time intervals (frame intervals according to the frame rate of the imaging operation of the imaging apparatus 1).

Note that, in the present disclosure, "frame data" refers to image data in units of one frame.

The video capture unit 21 transfers the input image data Vin in units of frames to the video encoder 24 via a bus 27.

The bus 27 is, for example, a bus such as peripheral component interconnect express (PCIe).

The CPU 22 functions as a controller of the transmission unit 2. In particular, the CPU 22 has a function as the packet transmission module 23 by, for example, software.

The video encoder 24 performs encoding processing of compressing and encoding in units of frame data, and transfers the encoded frame data to the packet transmission module 23 in the CPU 22 via the bus 27.

The packet transmission module 23 performs packet division processing for transmission, and performs processing of transmitting and outputting video stream data from the network interface unit 26 in units of packets.

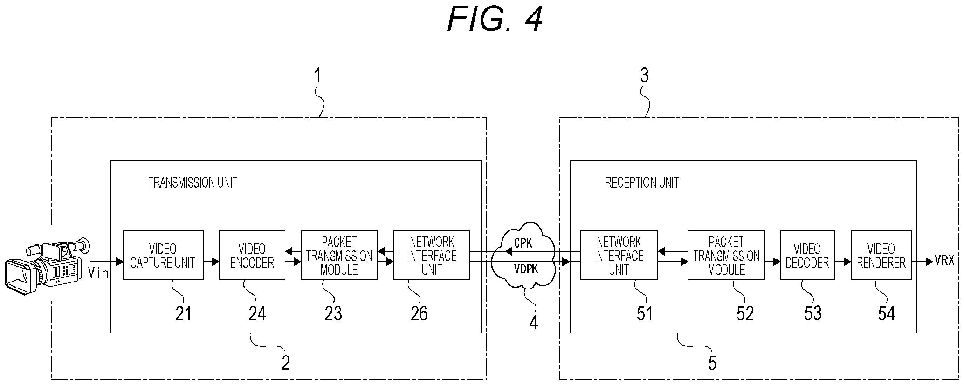

An outline of video stream transmission in such transmission unit 2 and the reception-side device 3 is illustrated in Fig. 4.

In the transmission unit 2, the image data Vin input to the video capture unit 21 is encoded by the video encoder 24 and packetized by the packet transmission module 23. Video data packet VDPK is delivered to the network 4 by the network interface unit 26.

The reception-side device 3 includes a reception unit 5.

In the reception unit 5, the video data packet VDPK is received by a network interface unit 51 and taken into a packet reception module 52. Then, the compressed frame data is extracted from each packet, and a video decoder 53 performs decoding processing with respect to the compression. Then, received video stream data VRX is output via a video renderer 54.

In such a transmission/reception system, a transmission delay may occur. Therefore, the reception unit 5 sequentially transmits a control packet CPK to the transmission unit 2 to transmit the status. For example, the control packet CPK includes information that can give a notification of the current reception rate, delay amount, and packet loss rate in the reception unit 5.

By receiving the control packet CPK, the packet transmission module 23 of the transmission unit 2 recognizes the current state of the network, and can perform control to change (decrease or increase) a transmittable rate and instruct the video encoder 24 to change (decrease or increase) the encoding rate (that is, increase or decrease the compression rate).

Note that, in the present disclosure, in order to particularly mainly deal with the transmission delay, description will be given focusing on a decrease in the encoding rate and the transmission rate in a case where a transmission delay occurs, but, it is of course possible to increase the transmission rate and the encoding rate according to recovery of the network congestion state.

<2. Comparative example>

Here, the occurrence of a transmission delay will be described prior to the description of the operation of the present embodiments.

A transmission/reception system that performs low-delay video streaming on a network with unstable communication quality such as a mobile communication network is considered.

In such a transmission/reception system, countermeasures against packet loss on a network have been mainly discussed so far. For example, in a case where a packet loss is detected, there is a measure of decreasing the transmission rate to avoid further packet loss. Furthermore, it has been considered to send an instantaneous decoding refresh (IDR) frame or change a reference picture selection (RPS) frame in order to prevent an error on an image due to a lost packet from being prolonged. The following documents can be referred to for these.

- "Evaluation of error resilience mechanisms for 3G conversational video",2008 Tenth IEEE International Symposium on Multimedia, 2008
- "H.264/AVC in Wireless Environments", IEEE Trans. on Circuits and Systems for Video Technology, 2003.

On the other hand, it has also been considered that congestion of the network is found by observing a round trip time (RTT) of packets, an increase in the number of packets staying on the network, and the like, and a transmission rate is reduced before a packet loss occurs. For example, the following documents can be referred to.

- "Experimental Investigation of the Google Congestion Control for Real-Time Flows", ACM SIGCOMM workshop on Future human-centric multimedia networking (FhMN '13), 2013.
- "Self-Clocked Rate Adaptation for Multimedia", IETF RFC 8298, 2017

In this way, the fuzziness of the image on the reception side due to the packet loss can be decreased, and moreover, the amount of packets accumulated in a buffer in the network can be decreased, so that the transmission delay can be decreased.

Changes in the RTT and the number of staying packets can be detected by exchanging control packets between a transmission terminal and a reception terminal. For example, the RTT can be measured by sending RTCP packets in which the transmission time is written to each other. For RTP, for example, the following document can be referred to.

- "RTP: A Transport Protocol for Real-Time Applications", IETF RFC 3550, 2003

Furthermore, when an acknowledgement (ACK) packet is sent from the reception side with respect to the received video data packet and ACK that does not return is checked on the transmission side, the number of staying packets can be estimated.

Now, in a case where the transmission rate is decreased, it is necessary to decrease the encoding rate of the video encoder, but the encoder generally cannot immediately decrease the rate.

For example, the following is obtained in consideration of the configuration of the transmission unit 2 in Fig. 3.

An encoding rate decrease request (hereinafter, it may be abbreviated as a "rate decrease request") output from the packet transmission module 23 on the CPU 22 is delivered to the bus 27 through an operating system (OS) running on the CPU 22, and is passed to the video encoder 24 so as to be processed by the video encoder 24.

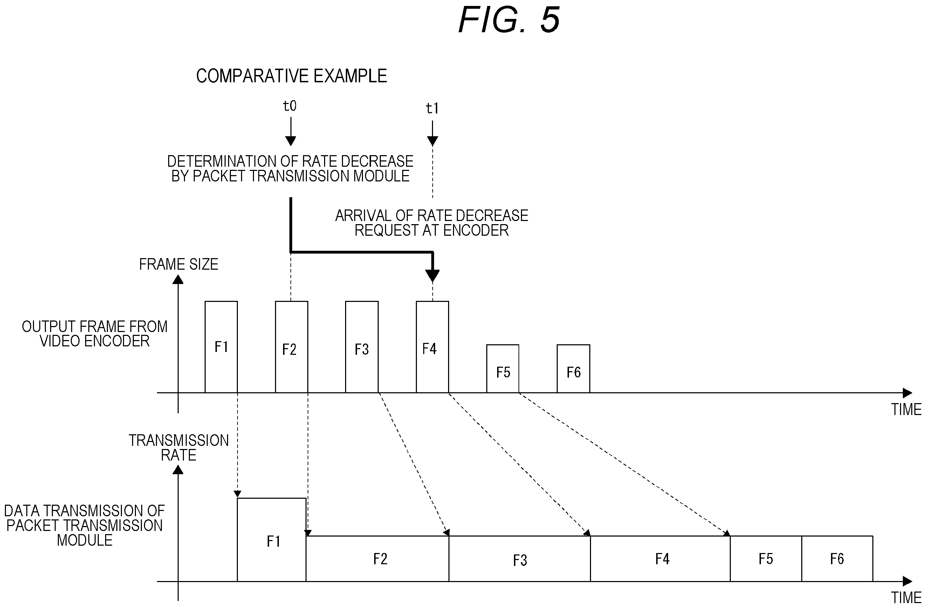

Fig. 5 illustrates a time chart from the encoding decrease request until it is reflected in the output of the video encoder 24.

Fig. 5 illustrates an operation of a comparative example with respect to the present embodiments.

Fig. 5 illustrates a time relationship between an output frame (F1, F2...) from the video encoder 24 and a frame (F1, F2...) related to data transmission from the packet transmission module 23 (horizontal axis indicates time). For the output frame from the video encoder 24, the vertical axis indicates the data size of the frame data. For data transmission from the packet transmission module 23, the vertical axis corresponds to the transmission rate.

Note that, since this is merely an explanatory model, it is assumed that it takes a time of exactly one frame interval to transmit one frame of encoded data at the beginning of transmitting the frame F1, and in this state, the packet transmission module 23 decreases the transmission rate to 1/2 for frame data to be transmitted after time point t0. That is, the packet transmission module 23 determines and instructs the decrease in the encoding rate of the video encoder 24 together with the decrease in the transmission rate of the video data packet VDPK at the time point t0.

However, as illustrated, even when the packet transmission module 23 determines to decrease the encoding rate at the time point t0, the rate decrease request does not reach the video encoder 24 immediately. For example, the rate decrease request reaches the video encoder 24 at time point t1.

Furthermore, when the encoding decrease request reaches the video encoder 24, the frame F4 already subjected to the encoding processing cannot be re-encoded at a new rate, and thus, is transferred to the packet transmission module 23 as it is, and is packetized and output. From the frame F5, the frame is encoded by the video encoder 24 at a new rate obtained, which is obtained by decreasing the rate.

In this way, even when the packet transmission module 23 determines to decrease the encoding rate, the video encoder 24 cannot immediately output frame data according to the rate.

Then, when the decrease in the encoding rate by the video encoder 24 is delayed, it is necessary to temporarily send large frame data encoded at a high rate at a low transmission rate. Therefore, the time required for completing the transmission of the frame data, that is, the transmission delay increases.

In the example of Fig. 5, since the frames F2, F3, and F4 are encoded at a large rate, which is before the rate change, when the packet transmission module 23 transmits the frames at the transmission rate decreased to 1/2, it takes twice the original time.

Moreover, the transmission delay accumulated in the frames F2, F3, and F4 remains in the frames after the frame F5.

In particular, in a case of aiming at video streaming with a very small delay, it is desirable to avoid such a transmission delay when the transmission rate decreases.

Therefore, in the present embodiments, in a case where the transmission rate is decreased on the transmission unit 2 side in the above situation, delay decrease processing is performed to prevent the transmission delay from continuing to increase, and an error does not continue in the decoded image in the reception-side device 3.

<3. First embodiment>

The operation of the first embodiment that can be executed by the transmission unit 2 having the configuration of Fig. 3 will be described. The first embodiment is an example in which frame data is discarded in the video encoder 24 as the delay decrease processing.

The packet transmission module 23 measures the RTT and the number of staying packets by exchanging the control packet CPK with the packet reception module 52 of the reception unit 5. Then, from a change in their values, congestion of the network 4, deterioration of wireless communication quality of the mobile network, and the like are detected.

When these are detected, the packet transmission module 23 determines to decrease the transmission rate, and instructs the video encoder 24 to decrease the encoding rate according to the new transmission rate. At this time, at the same time, the packet transmission module 23 also instructs the video encoder 24 regarding the number of frames to be discarded in the video encoder 24 (that is, the number of target frames for the delay decrease processing).

The packet transmission module 23 calculates the number of frames to be discarded as the delay decrease processing as described below.

In a case where the quantity of frame data output from the video encoder 24 from a time point at which the packet transmission module 23 determines to decrease the encoding rate to a point at which the video encoder 24 can output first frame data encoded according thereto is M, and a ratio between a new encoding rate and a previous encoding rate is 1 : R, the number of discarded frames is

$$\text{ceiling}((R - 1) \times M).$$

That is, the round-up calculation is performed by the ceiling function. For example, when $(R - 1) \times M = 2.4$, $\text{ceiling}(2.4) = 3$, and the number of target frames to be discarded = 3.

When receiving the rate decrease request of the encoding rate and the number of target frames, the video encoder 24 discards the frame data of the number of target frames and prepares encoding setting at a new encoding rate. In this case, inside the video encoder 24, the input frame data may be discarded and the encoding processing may not be performed.

Furthermore, in a case where the video encoder is, for example, an encoder of the H.264 standard or the H.265 standard and is an encoder that performs inter-frame compression by inter-frame reference, frame data to be output first after frame discarding refers to the last frame data before discarding.

Furthermore, when presentation time stamp (PTS) of the frame data output last before the frame discarding is "PTS_L", and PTS of the frame output first after the frame discarding is "PTS_F",

$$\text{PTS\_F} = (\text{PTS\_L} + (\text{number of target frames}) + 1) \times (\text{frame interval time})$$

is set.

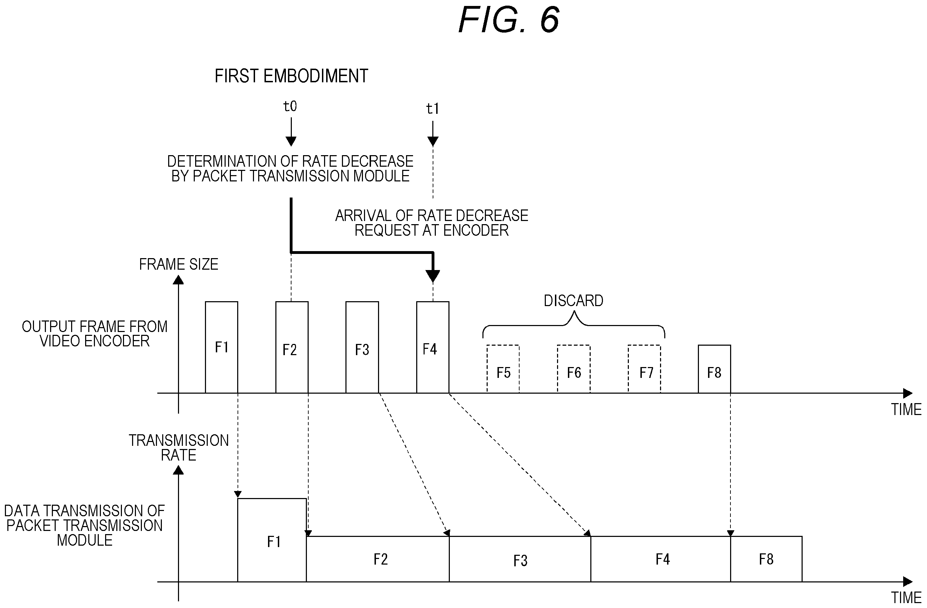

By doing so, the situation illustrated in Fig. 5 changes as illustrated in Fig. 6.

Note that, in Fig. 6, when R = 2 and M = 3, $\text{ceiling}((R - 1) \times M) = 3$, and the number of target frames to be discarded = 3.

Similar to Fig. 5, Fig. 6 illustrates a time relationship between an output frame (F1, F2...) from the video encoder 24 and a frame (F1, F2...) related to data transmission from the packet transmission module 23.

The video encoder 24 receives the rate decrease request at time point t2 at which the frame F4 is being encoded. In this case, since the number of target frames = 3, the video encoder 24 discards three frames: the frames F5, F6, and F7.

Then, the video encoder 24 sets at least the frame output before discarding as a reference destination for the frame F8 output to the packet transmission module 23 first after discarding. Desirably, it is assumed that the frame F4 output last before discarding is set as a reference destination.

Regarding the transmission from the packet transmission module 23, since the frames F5, F6, and F7 are discarded, the frame F8 is transmitted and output at the original time and received by the reception-side device 3 although the delay increases in the frames F2, F3, and F4.

Furthermore, since the frame F8 refers to the frame F4 and the frame F4 is already decoded at the time point of decoding the frame F8 in the reception-side device 3, the frame F8 can be decoded without an error.

Furthermore, since the PTS of the frame F8 is set as described above, the frame F8 is reproduced four frames after the original reproduction time of the frame F4, that is, at the original timing.

Note that, since the frames F2, F3, and F4 arrive at the reception-side device 3 with delay, the reception-side device 3 displays the frames F2, F3, and F4 later than the original timing. Moreover, since the frames F5, F6, and F7 are discarded, the reception-side device 3 continues to display the frame F4 during that time. However, the frame F8 and subsequent frames are displayed without delay or error.

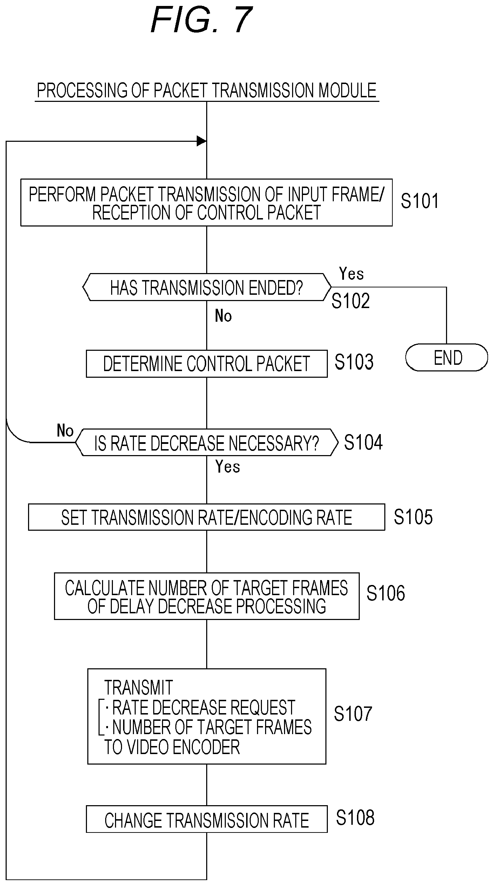

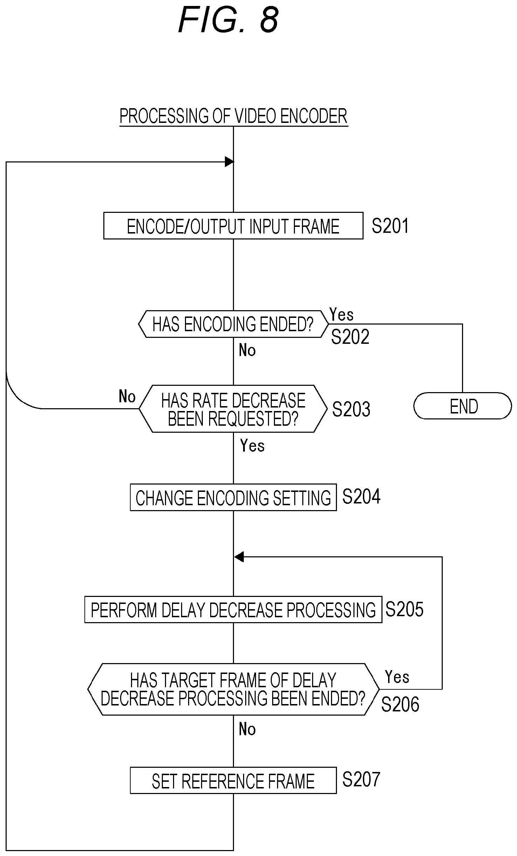

The processing of the packet transmission module 23 and the video encoder 24 in the above case is illustrated in Figs. 7 and 8.

Fig. 7 illustrates a processing example of the packet transmission module 23 during packet transmission.

Step S101 illustrates processing in which the packet transmission module 23 packetizes the encoded frame data input from the video encoder 24 and transmits the packetized frame data as the video data packet VDPK, and processing in which the packet transmission module 23 receives the control packet CPK from the reception-side device 3.

In Step S102, the packet transmission module 23 monitors the end of the transmission of the video data packet VDPK, that is, the end of the video streaming transmission.

In Step S103, the packet transmission module 23 checks the content of the received control packet CPK and determines whether or not a rate decrease is necessary.

In a normal state in which the rate decrease control is not necessary, the packet transmission module 23 continues the video streaming transmission in the loop of Step S101, S102, S103, and S104 described above.

In a case where the video streaming transmission ends, the processing of Fig. 7 ends from Step S102.

The packet transmission module 23 determines occurrence of a transmission delay or a possibility of occurrence of a transmission delay during video streaming transmission, and in a case where it is determined that a rate decrease is necessary, the processing proceeds from Step S104 to Step S105, and sets a new transmission rate and encoding rate. For example, an appropriate rate is set according to a transmission delay amount, a communication status, and the like determined from the control packet CPK.

In Step S106, the packet transmission module 23 calculates the number of target frames for the delay decrease processing, for example, by calculating the ceiling function described above.

In Step S107, the packet transmission module 23 transmits a rate change request to the video encoder 24 so that the encoding rate is decreased to the new encoding rate set in Step S105. At this time, the number of target frames calculated in Step S106 is also transmitted.

Thereafter, the transmission rate is changed in Step S108, and the processing returns to Step S101 to perform transmission processing of the video data packet VDPK at the new transmission rate.

With respect to the processing of the packet transmission module 23 as described above, the video encoder 24 performs processing as illustrated in Fig. 8 during encoding.

In Step S201, the video encoder 24 continuously encodes the input frame data and outputs the encoded frame data to the packet transmission module 23.

During this time, the video encoder 24 determines the end of encoding according to the end of the video streaming transmission in Step S202, and monitors the reception of the rate decrease request from the packet transmission module 23 in Step S203.

The video encoder 24 ends the processing of Fig. 8 according to the end of encoding.

In a case where the rate decrease request is received from the packet transmission module 23, the video encoder 24 proceeds from Step S203 to Step S204 and changes the encoding setting. That is, the encoding rate is changed. However, this is an encoding setting change that becomes effective after the encoding of the frame being encoded at the time point of reception of the rate decrease request is completed.

Then, in Step S205, the video encoder 24 performs delay decrease processing. This is performed until it is determined in Step S206 that the delay decrease processing has been completed for the number of frames indicated by the number of target frames of the delay decrease processing.

Specifically, the frame data input after the reception of the rate decrease request is discarded. That is, the frame data is discarded at the time point of input, but is not encoded.

Note that the input frame data may be encoded and then the encoded frame data may be discarded. Of course, discarding the input frame data without encoding decreases a processing load, which is desirable.

After discarding the number of target frames, the video encoder 24 proceeds to Step S207, performs reference frame setting, returns to Step S201, and then performs encoding at the new encoding rate instructed from the packet transmission module 23.

In Step S207, the frame data that is a frame before the target frame of the delay decrease processing and has already been output to the packet transmission module 23 is set as the reference destination of the inter-frame reference. In Fig. 6, for example, it is the frame F4. Therefore, the frame F8, which is the first frame after the rate change, becomes frame data that refers to the frame F4 that has already been output. Note that since the frames F3, F2, F1, or the like has also been output, they may be a reference destination.

<4. Second embodiment>

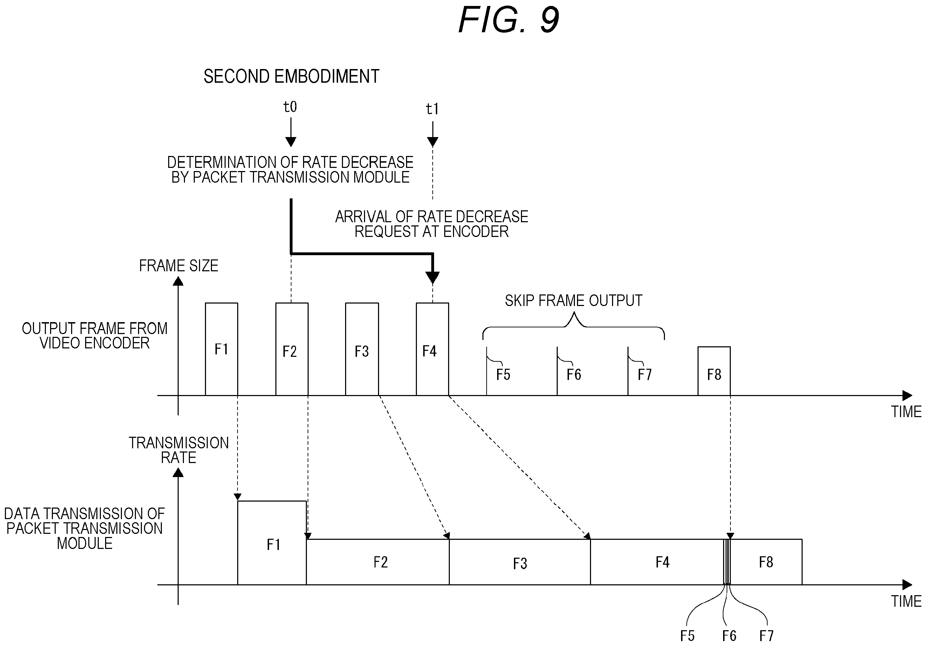

An operation of the second embodiment will be described with reference to Fig. 9. The second embodiment is an example in which the video encoder 24 outputs a skip frame as the delay decrease processing.

Fig. 9 is a diagram of the same format as Fig. 6 and illustrates a state in which the video encoder 24 outputs skip frames for the three frames: the frames F5, F6, and F7 corresponding to the number of target frames of the delay decrease processing.

The skip frame is, for example, a frame that does not include actual image data but includes information of only a reference destination, and has an extremely small data size.

The packet transmission module 23 also transmits and outputs skip frames of the frames F5, F6, and F7 subsequent to the frame F4. Thereafter, the frame data of the frame F8 encoded at the new encoding rate is transmitted.

In a case where the processing capability of the video decoder 53 of the reception-side device 3 is high and the skip frame can be instantaneously decoded, the video encoder 24 may output a very small skip frame having only frame reference information instead of internally discarding the frame as described above. Since the skip frame has a small data size, transmission delay is hardly deteriorated.

Note that a processing example in this case is similar to those in Figs. 7 and 8. It is sufficient if the video encoder 24 performs skip frame output instead of frame discarding as the delay decrease processing in Step S205 in Fig. 8.

<5. Third embodiment>

The third embodiment is an example in which frame discarding as the delay decrease processing is performed in the packet transmission module 23. Furthermore, the video encoder 24 switches necessary reference destinations.

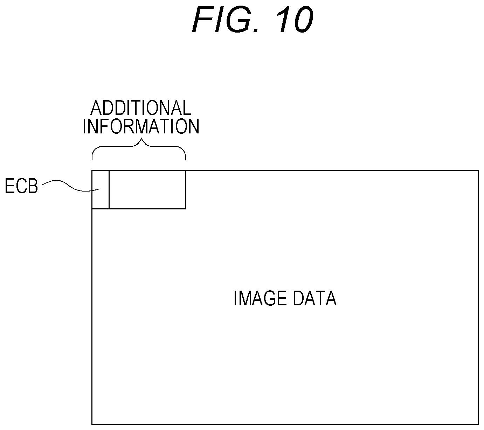

Fig. 10 schematically illustrates one frame of encoded data output from the video encoder 24.

As illustrated in Fig. 10, the video encoder 24 can add additional information header data to the frame data and output the data, and an encoding rate change bit ECB is included in the additional information.

The encoding rate change bit ECB indicates that the encoding rate has changed from the frame.

For example, as illustrated, it is assumed that the additional information is placed in a portion before the image data of the frame starts, and one bit of the additional information is the encoding rate change bit ECB. The video encoder 24 sets the encoding rate change bit ECB only in the first frame after the change in the encoding rate, and does not set the bit in other frames.

The packet transmission module 23 determines to decrease the transmission rate, notifies the video encoder 24 of the rate change request, and then continues to discard the frame data input from the video encoder 24 until the frame data in which the encoding rate change bit ECB is set is input from the video encoder 24.

Furthermore, when notifying the video encoder 24 of the rate change request, the packet transmission module 23 also notifies the video encoder 24 of the ID number of the last frame transmitted as the video data packet VDPK before discarding the frame data (hereinafter, "frame ID"). In the case of the H.264 standard, "frame_num" on the slice header of a video frame can be used as the frame ID.

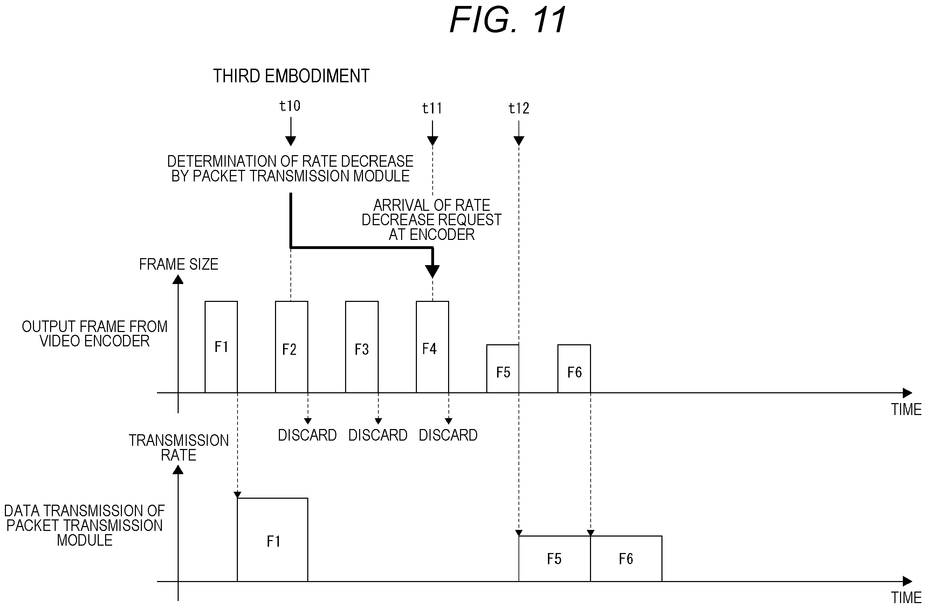

In a format similar to that of Fig. 6, Fig. 11 illustrates a time relationship between an output frame (F1, F2...) from the video encoder 24 and a frame (F1, F2...) related to data transmission from the packet transmission module 23.

After the packet transmission module 23 determines the rate decrease at time point t10, the video encoder 24 receives the rate decrease request at time point t11 at which the frame F4 is being encoded. The video encoder 24 encodes the frame F5 and the subsequent frames at the new encoding rate.

In this case, after the time point t10, the frames F2, F3, and F4 of the old rate output from the video encoder 24 are also input to the packet transmission module 23, but the packet transmission module 23 discards them and does not transmit them as the video data packet VDPK. Thus, after the video data packet VDPK for the frame F1 is transmitted as illustrated, the video data packet VDPK for the frame data encoded at the new rate is transmitted from time point t12.

Since the frame data of the frames F2, F3, and F4 of the old rate having a large data size is discarded and does not become the transmission target, the transmission of the frame F5 encoded first at the new rate is not delayed.

Here, it is assumed that a maximum of M pieces of frame data are output after the packet transmission module 23 determines the rate decrease until the frame data encoded at the new low rate is output from the video encoder 24. In Fig. 11, M = 3 as an example.

It is assumed that the video encoder 24 holds a certain number of M + 1 or more pieces of latest encoded plurality of frame data in the memory 25. For example, in a ring memory form, the oldest frame data in the memory 25 is always rewritten to the latest encoded frame data, so that each pieces of frame data is stored for a substantially constant period.

In a case where inter-frame compression is performed, the video encoder 24 normally refers to the latest frame data among the pieces of frame data stored in the memory 25 when encoding new frame data. However, when the frame discarding is performed by the packet transmission module 23, for the first frame to be encoded at the low new rate, the video encoder 24 switches the reference destination to refer to the latest frame among the frames not discarded within the pieces of frame data held in the memory 25. That is, the video encoder 24 performs the operation described below.

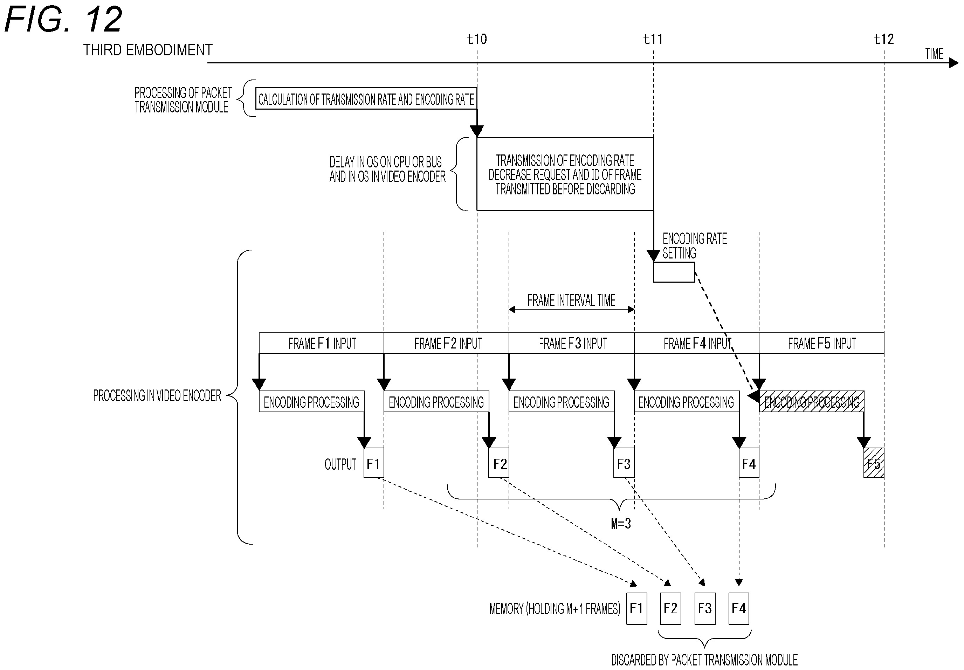

Description will be given with reference to Fig. 12. Fig. 12 illustrates the processing by the packet transmission module 23, the delay of the rate decrease request, and the processing of the video encoder 24 in the period illustrated in Fig. 11 in more detail.

It is assumed that M = 3 and four pieces of frame data are held in the memory 25.

After the packet transmission module 23 determines the rate decrease at the time point t10, the video encoder 24 receives the rate decrease request at the time point t11, and also receives the frame ID of the last frame that has been transmitted by the packet transmission module 23.

It is assumed that the last frame transmitted by the packet transmission module 23 before discarding is the frame data of the frame F1, and the ID number of the frame received by the video encoder 24 from the packet transmission module 23 is "1". In this case, the video encoder 24 searches for a frame having the largest frame ID equal to or less than "1" of the frame ID in the memory 25, that is, the latest frame among the frames not discarded.

In the case of Fig. 12, it is the frame F1 having the frame ID = "1". Thus, the video encoder 24 causes the latest frame F5 encoded at the new low rate to refer to the frame F1.

Furthermore, since the video decoder 53 in the reception unit 5 holds M + 1 (= four) pieces of decoded frame data, the frame F1 is held at the time of decoding the frame F5, and decoding of the frame F5 is performed without any problem. Thus, on the reception side, during the period in which the frames F2 to F3 are supposed to be displayed, the frame F1 continues to be displayed, but the frame F5 and the subsequent frames are correctly displayed without delay or error.

Furthermore, the PTS of the frame F5 transmitted first by the packet transmission module 23 after the frame discarding is advanced by (number of discarded frames + 1) $\times$ (frame interval time) from the PTS of the frame F1 transmitted last before the frame discarding. That is, it is set so as to advance by four frames. Thus, the frame F5 is reproduced at the correct timing in the reception-side device 3.

Comparing such third embodiment with the first embodiment, in the third embodiment, frame data (that is, the frames F2, F3, and F4 in Figs. 11 and 12) having a large size encoded at the old encoding rate before the rate decrease is not transmitted onto the network 4. Thus, the number of frames to be discarded is small, and the possibility of deteriorating the congestion on the network 4 is lower.

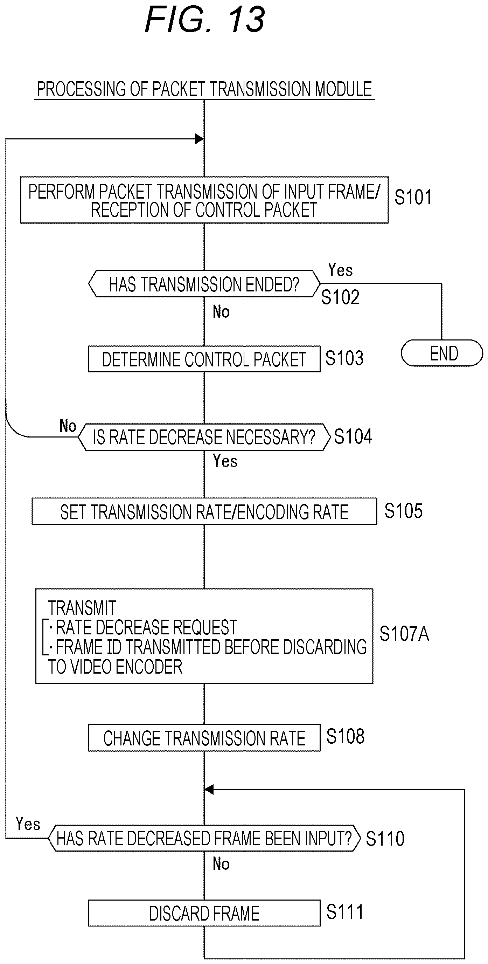

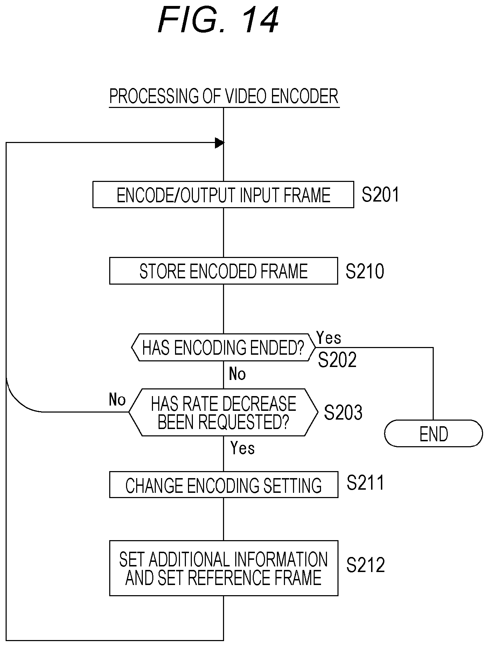

The processing of the packet transmission module 23 and the video encoder 24 in the third embodiment above is illustrated in Figs. 13 and 14. Note that processing similar to those in Figs. 7 and 8 described above is denoted by the same step numbers, and redundant description is avoided.

Fig. 13 illustrates a processing example of the packet transmission module 23 during packet transmission, but Steps S107A, S110, and S111 are different from the steps of Fig. 7. Furthermore, the processing of Step S106 described with reference to Fig. 7 becomes unnecessary.

The packet transmission module 23 performs the processing from Steps S101 to S105 in Fig. 13 similarly to the example of Fig. 7.

After setting the transmission rate and the encoding rate in Step S105 in Fig. 13, in Step S107A, the packet transmission module 23 transmits a rate change request to the video encoder 24 so that the encoding rate is decreased to the new encoding rate set in Step S105. At this time, the frame ID of the frame data transmitted and output last before discarding is also transmitted.

Then, the packet transmission module 23 changes the transmission rate in Step S108.

Thereafter, in Step S110, the packet transmission module 23 checks whether or not the frame data input from the video encoder 24 is a frame to which the encoding rate change bit ECB has been added, that is, a frame after a decrease in the encoding rate. In a case where it is the frame data encoded at the old rate in which the encoding rate change bit ECB is off, the packet transmission module 23 discards the frame data in Step Sill.

When the frame data encoded at the new rate in which the encoding rate change bit ECB is on is input, the packet transmission module 23 returns to Step S101 and performs transmission processing of the video data packet VDPK at the new transmission rate.

The video encoder 24 performs processing as illustrated in Fig. 14 in the video encoder. The difference from Fig. 8 is the processing of Steps S210, S211, and S212.

In Step S201, the video encoder 24 continuously encodes the input frame data and outputs the encoded frame data to the packet transmission module 23, and at this time, also stores the frame data encoded in Step S210 in the memory 25.

When the rate decrease request is received from the packet transmission module 23, the video encoder 24 proceeds from Step S203 to Step S211 and changes the encoding setting. That is, the encoding rate is changed.

Furthermore, the video encoder 24 performs additional information setting and reference frame setting in Step S212, and returns to Step S201.

Thereafter, the video encoder 24 performs encoding at the new encoding rate instructed by the packet transmission module 23.

Here, the additional information setting and the reference frame setting in Step S212 are performed for the first frame data after the rate decrease, and first, the encoding rate change bit ECB is on in the frame.

Furthermore, in the frame, the reference destination is set to a frame having the largest frame ID equal to or smaller than the frame ID a notification of which has been given from the packet transmission module 23 among the frames stored in the memory 25.

Note that it is sufficient if it is frame data having a frame ID equal to or smaller than the frame ID a notification of which has been given from the packet transmission module 23, and it may not necessarily have the largest frame ID.

However, by setting the frame having the largest frame ID equal to or smaller than the notified frame ID as the reference destination, the video decoder 53 side can set the frame decoded immediately before as the reference destination when decoding the first frame data after the rate change.

In a case where it is not necessarily a frame having the largest frame ID equal to or smaller than the notified frame ID, that is, in a case where a frame having a frame ID equal to or less than the notified frame ID may be the reference destination, it is sufficient if the reception-side device 3 has memory in a similar manner. That is, the video decoder 53 of the reception unit 5 also includes memory capable of storing the number of frames similar to that of the memory 25 at the stage of decoded data, and holds the frame data of the decoding result on the memory for the same number of frames as that of the memory 25. Thus, a reference frame exists at the time of decoding, and decoding can be performed without an error.

Conversely, by using a frame having the largest frame ID equal to or smaller than the notified frame ID as a reference destination, it is not necessary to store many frames at the time of decoding in the reception-side device 3.

Incidentally, there may be a case where frame data having a frame ID equal to or smaller than the frame ID a notification of which has been given from the packet transmission module 23 does not exist in the memory 25.

In that case, in Step S212, the video encoder 24 sets the frame to be first encoded at the new rate as an IDR frame.

Furthermore, since the data size of the IDR frame is usually very large, in a case where the first frame after the rate decrease is an IDR frame, it is also preferable that the frame is encoded while the image quality is decreased, and the data size is set to a predetermined size or less, for example, a size at which no delay occurs at the decreased transmission rate.

<6. Fourth embodiment>

The fourth embodiment is also an example in which the packet transmission module 23 performs the frame discarding as the delay decrease processing, but a video stream into which an LTR frame is inserted is assumed.

In video codecs such as the H.264 standard and the H.265 standard, an LTR frame can be set periodically.

The LTR frame is held in the video encoder 24 until an explicit instruction is given. Now it is assumed that one LTR frame is inserted for each "Tr" frame. It is assumed that the video decoder 53 also always holds one LTR frame. Furthermore, it is assumed that an IDR frame is inserted every "Ti" frame, and Ti > Tr.

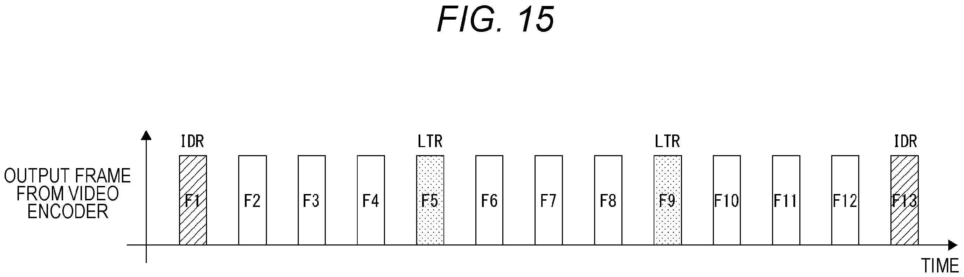

Fig. 15 illustrates an example in which the IDR frame is transmitted every twelve frames and during which the LTR frame is transmitted every four frames as an example of the output from the video encoder 24 (Ti = 12, Tr = 4).

Furthermore, similarly to the third embodiment, the video encoder 24 adds the encoding rate change bit ECB as additional information to the frame data, and the packet transmission module 23 also gives a notification of the frame ID of the last frame transmitted before discarding when notifying the video encoder 24 of the rate decrease request.

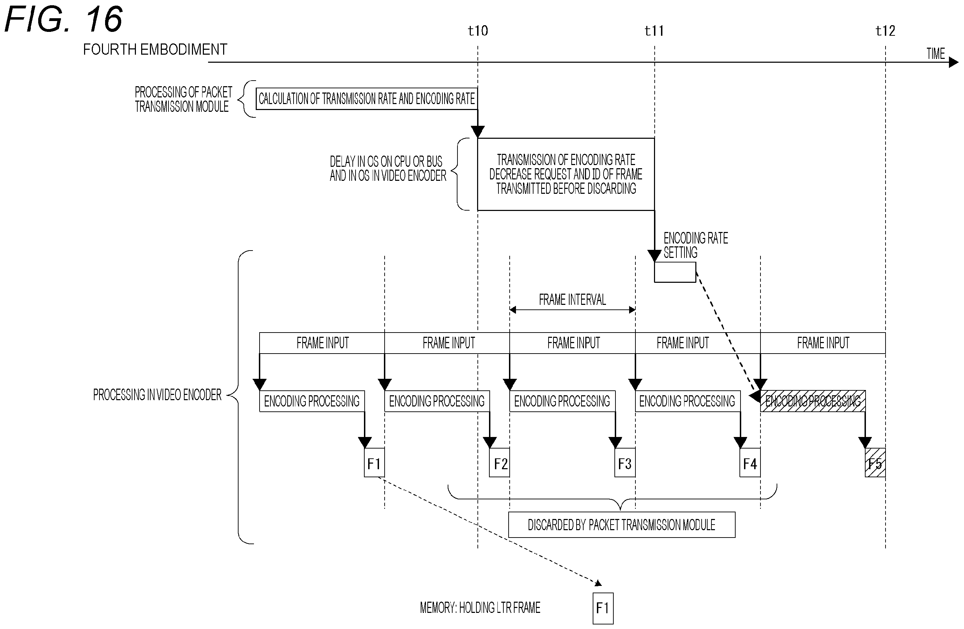

The operation at the time of rate change is illustrated in Fig. 16 in a format similar to that of Fig. 12. Substantially similarly, it is assumed that the frame F1 is an LTR frame. The LTR frame is temporarily stored in the memory 25. That is, in Fig. 12, the predetermined quantity of latest frame data is temporarily stored, but in the case of Fig. 16, it is sufficient if the LTR frame is temporarily stored, for example, until rewriting with a next LTR frame.

Here, it is assumed that the video encoder 24 changes the encoding rate, and until the first frame data of the rate is output, N frames including that frame are output. According to the situation during this period, the first frame data to be encoded at the new rate is set.

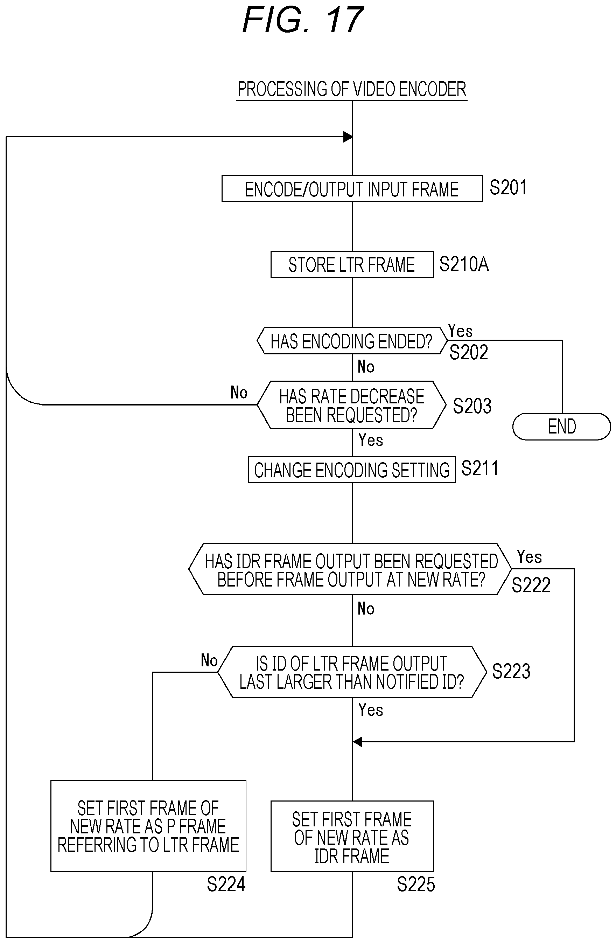

The processing of the video encoder 24 will be described with reference to Fig. 17. Note that the difference from Fig. 14 is Step S210A and Step S222 and subsequent steps.

In Step S210A, when the LTR frame is encoded, the LTR frame data is stored in the memory 25.

The other processing up to Step S211 is similar to that in Fig. 14.

Upon receiving the rate decrease request and changing the setting of the encoding rate in Step S211, the video encoder 24 determines whether or not it is necessary to output the IDR frame before outputting the frame of the new rate in Step S222.

When any of the N frames described above needs to be the IDR frame, the video encoder 24 proceeds to Step S225 and sets the first frame after the change in encoding rate as the IDR frame.

Furthermore, there is also a case where it is determined that the frame ID of the last LTR frame is larger than the frame ID of the last output frame, i.e., the last output LTR frame has been discarded by the packet transmission module 23. In this case, the video encoder 24 proceeds to Steps S222, S223, and S225, and sets the first frame after the change in encoding rate as the IDR frame.

When the processing proceeds to Step S224 in a case other than the case described above, the video encoder 24 sets the first frame after the change in encoding rate as a P frame and causes it to refer to the last LTR frame.

Note that, in Steps S224 and S225, when the first frame after the change in encoding rate is output, setting is performed such that an encoding rate change bit of the header is set.

The processing on the packet transmission module 23 side is substantially similar to that in Fig. 13, but it is not necessary to transmit the frame ID in Step S107A.

Through the above processing, it is possible to maintain an appropriate reference relationship in the transmission of the video data packet VDPK including the LTR.

Note that, in a case where the frame to be first encoded at the new rate is an IDR frame by the setting in Step S225, in view of the fact that the IDR frame usually has a very large data size, it is also preferable that the frame is encoded at a rate smaller than a designated encoding rate, and the data size is set to a predetermined size or less, for example, a size at which no delay occurs at the decreased transmission rate.

The transmission delay of the frame is similar to that in Fig. 11. However, in the case of the fourth embodiment, the frame F5 refers to the latest LTR frame (for example, the frame F1 in Fig. 16).

<7. Summary and variation example>

According to the above embodiments, the following effects can be obtained.

The transmission unit 2 of the embodiments includes the video encoder 24 that encodes each piece of frame data of an image, and the packet transmission module 23 (transmission processing unit). During the transmission processing of the frame data encoded by the video encoder 24, the packet transmission module 23 performs rate decrease control on the encoding rate in the video encoder 24 according to, for example, the transmission delay to the reception-side device 3, and executes the delay decrease processing of decreasing the delay amount of the transmission data for the frame data of one or a plural number of target frames.

That is, the transmission unit 2 decreases the encoding rate and the transmission rate in accordance with occurrence of transmission delay, prediction thereof, or the like, thereby preventing an increase in the delay, and executes the delay decrease processing such as discarding of partial data, thereby eliminating the delay at the time of transmission rate decrease. Thus, when a transmission delay occurs in image data transmission such as video streaming, it can be appropriately decreased or eliminated, and a system in which a transmission delay hardly occurs can be constructed.

Furthermore, by appropriately setting the number of target frames of the delay decrease processing, it is possible to decrease or eliminate the transmission delay at the time of transmission rate decrease by discarding the minimum number of frames or the like. Furthermore, by minimizing the number of frames to be discarded or the like, fuzziness of an image reproduced by the reception-side device can be minimized. For example, it is also possible to set such a short time that the viewer hardly perceives the fuzziness of the image.

That is, the transmission unit 2 according to the embodiments performs, on the encoding side, the delay decrease processing such as discarding in a form in which an error does not continue in the decoded image in the reception-side device 3, and can prevent the transmission delay from continuing to increase.

In the first embodiment, an example has been described in which the packet transmission module 23 transmits the encoding rate decrease request and the number of target frames of the delay decrease processing to the video encoder 24, and the video encoder 24 decreases the encoding rate in response to the encoding rate decrease request and performs processing of not outputting the frame data of the number of target frames to the transmission processing unit as the delay decrease processing.

That is, the delay decrease processing is executed on the video encoder 24 side. For example, the frame data of the number of target frames instructed by the video encoder 24 is discarded in the video encoder so as not to be output to the transmission processing unit.

Specifically, when the rate decrease request is detected, after encoding and outputting of the frame being encoded at that time are completed, the video encoder 24 does not output the encoded frame data for the instructed number of target frames to the packet transmission module 23 from a next frame as the delay decrease processing. Thus, as described with reference to Fig. 6, it is possible to eliminate or decrease the transmission delay and transmit the frame data encoded at the new rate and to prevent the delay from occurring at the decreased transmission rate. That is, the transmission delay can be decreased by simple processing in the video encoder 24.

In the first embodiment, an example has been described in which the video encoder 24 performs, as the delay decrease processing, the processing of not encoding but discarding the frame data input for the instructed number of target frames.

That is, as the delay decrease processing, it is sufficient if the video encoder 24 discards the necessary quantity of frame data input after reception during the encoding rate decrease request as it is. Therefore, useless encoding processing such as encoding frame data to be discarded is not performed. Furthermore, the delay decrease processing can be realized by extremely simple processing of discarding the input frame data.

In the first embodiment, an example has been described in which the video encoder 24 performs encoding on the frame data to be first output to the packet transmission module 23 after the target frame of the delay decrease processing such that the frame data that is a frame before the target frame of the delay decrease processing and has been output to the packet transmission module 23 is the reference destination of the inter-frame reference.

For example, in a case where the video encoder is an encoder of the moving image compression standard that is the H.264 standard or the H.265 standard and performs the inter-frame reference, for example, the frame data output to the transmission processing unit after discarding one or a plurality of target frames as the delay decrease processing is assumed to have the frame data already output to the transmission processing unit as a reference destination.

Thus, the reference destination of the inter-frame reference becomes the frame data not discarded but transmitted to the reception-side device 3. Thus, the frame data after the decrease in the encoding rate can be brought into a state of being capable of being appropriately decoded by the reception-side device 3.

Note that, although the case of performing inter-frame compression that performs inter-frame reference is described here, it should be noted that the technology of the delay decrease processing of the embodiments can also be applied to a case of performing intra-frame compression.

In the first embodiment, the video encoder 24 encodes the frame data to be first output to the packet transmission module 23 after the target frame of the delay decrease processing such that the frame data last output to the transmission processing unit before the delay decrease processing is the reference destination of the inter-frame reference.

Thus, the reference destination of the inter-frame reference becomes the frame data not discarded but transmitted to the reception-side device 3. In the video stream, the first frame data after the rate change has the immediately preceding frame data as a reference destination. Thus, the frame data after the decrease in the encoding rate can be brought into a state of being capable of being appropriately decoded by the reception-side device 3.

In the first embodiment, the time stamp value of the frame data first output to the packet transmission module 23 after the target frame of the delay decrease processing by the video encoder 24 is a value advanced by {(number of target frames of delay decrease processing) + 1} × (frame interval time) from the time stamp value of the frame data last output to the transmission processing unit before the delay decrease processing.

Thus, the frame data first output to the transmission processing unit after the target frame of the delay decrease processing is received by the reception-side device 3 at the original time and reproduced at the original timing.

In the first embodiment, in a case where the number of frames output from the video encoder 24 from a time point at which the packet transmission module 23 determines to decrease the encoding rate until the video encoder 24 can output first frame data encoded accordingly is N, and a ratio between a new encoding rate and an old encoding rate related to rate decrease is 1 : R, the number of target frames is equal to or greater than ceiling((R - 1) × N).

Thus, the number of target frames of the delay decrease processing can be appropriately set in consideration of the difference between the old and new encoding rates at the time of switching, which is suitable for eliminating or decreasing the transmission delay.

In the second embodiment, an example has been described in which the video encoder 24 performs processing of outputting skip frame data including reference information and not including image data for the instructed number of target frames as the delay decrease processing.

The skip frame data has an extremely small data size, and it is possible to actually decrease or eliminate a transmission delay by replacing normal frame data with skip frame data. Then, consistency is maintained as a video stream, and an error stream is not generated.

In the third and fourth embodiments, an example has been described in which the packet transmission module 23 transmits an encoding rate decrease request to the video encoder 24, the video encoder 24 decreases the encoding rate in response to the encoding rate decrease request, and the packet transmission module 23 performs processing of not transmitting to the reception-side device 3 but discarding the frame data of the number of target frames among the frame data output from the video encoder 24 as the delay decrease processing.

That is, the delay decrease processing is executed on the packet transmission module 23 side.

Thus, as described with reference to Figs. 11, 12, and the like, the transmission delay of the frame data encoded at the new rate can be eliminated or decreased, and the delay can be prevented from occurring at the decreased transmission rate. That is, the transmission delay can be decreased by simple processing in the packet transmission module 23.

In particular, as compared with the first embodiment, frame data having a large size before the rate change is not transmitted to the reception-side device 3. Thus, the number of frames to be discarded is small, the fuzziness of the reproduced image in the reception-side device 3 is minimized, and it is advantageous for decreasing the transmission delay and more suitable for improving the network congestion status.

In the third and fourth embodiments, the video encoder 24 adds rate change information by the encoding rate change bit ECB to the frame data to be first encoded after the change in encoding rate, and the packet transmission module 23 discards the frame data input from the video encoder 24 before the frame data to which the rate change information is added is input after the transmission of the encoding rate decrease request.

Thus, when the packet transmission module 23 continues discarding the frame data encoded at the old rate until the frame data encoded at the new rate is input, the delay decrease processing can be appropriately executed, and the delay decrease processing becomes easy.

In the third embodiment, the packet transmission module 23 transmits the frame ID (frame identification information) of the frame data already transmitted to the reception-side device 3 before execution of the delay decrease processing to the video encoder 24, and the video encoder 24 performs encoding on the frame data to be first output to the packet transmission module 23 after the encoding rate is decreased in response to the encoding rate decrease request such that the frame data indicated by the frame ID is the reference destination of the inter-frame reference.

By setting the frame data indicated by the frame ID as the reference destination, the frame data of the reference destination becomes frame data not discarded but transmitted to the reception-side device 3. Thus, the frame data after the decrease in the encoding rate can be brought into a state of being capable of being appropriately decoded by the reception-side device 3.

In the third embodiment, it is assumed that the frame ID a notification of which is given from the packet transmission module 23 to the video encoder 24 is the frame ID of the last frame data transmitted to the reception-side device 3 before execution of the delay decrease processing.

Thus, the reference destination of the inter-frame reference becomes the frame data not discarded but transmitted to the reception-side device 3. In the video stream, the first frame data after the rate change has the immediately preceding frame data as a reference destination. Thus, the frame data after the decrease in the encoding rate can be brought into a state of being capable of being appropriately decoded by the reception-side device 3.

In the third and fourth embodiments, the time stamp value of the frame data first transmitted after the target frame of the delay decrease processing by the packet transmission module 23 is a value advanced by {(number of target frames of delay decrease processing) + 1} × (frame interval time) from the time stamp value of the frame data last transmitted before the delay decrease processing.

Thus, the frame data first output to the transmission processing unit after the target frame of the delay decrease processing is received by the reception-side device 3 at the original time and reproduced at the original timing.

In the third embodiment, an example has been described in which, in a case where the frame data indicated by the frame ID cannot be the reference destination of the inter-frame reference, the video encoder 24 performs encoding such that the frame data to be first output to the packet transmission module 23 after decreasing the encoding rate in response to the encoding rate decrease request is an IDR frame.

Thus, even in a case where there is no already transmitted referable frame before the frame data is discarded, a case where the IDR frame is included in the discarded frame data, or the like, it is possible to set a state in which the reception-side device 3 can appropriately decode the frame data.

In the third and fourth embodiments, an example has been described in which in a case where the frame to be first output after the rate decrease is the IDR frame, the video encoder 24 sets the encoding rate to be lower than the rate designated by the encoding rate decrease request and suppresses the data size of the IDR frame to be transmitted within a predetermined maximum size.

Since the IDR frame is often usually very large, in a case where the first frame data after the rate change is an IDR frame, the video encoder 24 performs encoding at a rate lower than the encoding rate designated by the packet transmission module 23 so that it becomes equal to or smaller than a predetermined size.

Thus, the delay decrease effect can be prevented from being decreased by the IDR frame.

In the third embodiment, an example has been described in which the video encoder 24 includes the memory 25 that can temporarily store the encoded frame data, and the frame data to be first output to the packet transmission module 23 after the encoding rate is decreased in response to the encoding rate decrease request is encoded using the frame data stored in the memory 25 as a reference destination.

The video encoder 24 includes the memory 25 that stores frame data of about several frames and temporarily stores the encoded frame data for a certain period of time, so that the frame data transmitted before being discarded by the packet transmission module 23 can be stored in the memory 25. Therefore, it is possible to perform encoding using frame data transmitted to the reception-side device 3 several frames before as a reference destination.

In the fourth embodiment, an example has been described in which the video encoder 24 periodically outputs the LTR frame (long-time reference frame), and the frame data to be first output to the packet transmission module 23 after the encoding rate is decreased in response to the encoding rate decrease request is encoded using the LTR frame as a reference destination.

Thus, an appropriate reference state can be maintained in a case where the LTR frame is transmitted.

In the fourth embodiment, an example has been described in which, in a case where the LTR frame is determined to be discarded by the packet transmission module 23, the video encoder 24 sets, as the IDR frame, frame data to be first output to the packet transmission module 23 after the encoding rate is decreased in response to the encoding rate decrease request.

Thus, even in consideration of discarding in the packet transmission module 23, the video stream after rate conversion transmitted to the reception-side device 3 can be correctly reproduced. In particular, it is also possible to avoid that reference is not possible and an error propagates to a large number of frames.

Note that the effects described in the present description are merely illustrative and are not limitative, and other effects may be provided.

Note that the present technology may also adopt the configuration described below.

(1) A transmission apparatus including:

a video encoder that performs encoding for each piece of frame data of an image; and
a transmission processing unit that performs rate decrease control on an encoding rate in the video encoder during transmission processing of image data encoded by the video encoder and executes delay decrease processing of decreasing a delay amount of transmission data for frame data of one or a plural number of target frames.

(2) The transmission apparatus according to (1), in which

the transmission processing unit transmits an encoding rate decrease request and the number of target frames of the delay decrease processing to the video encoder, and
the video encoder decreases the encoding rate in response to the encoding rate decrease request and performs processing of not outputting the frame data of the number of target frames to the transmission processing unit as the delay decrease processing.

(3) The transmission apparatus according to (2), in which
the video encoder performs, as the delay decrease processing, processing of not encoding but discarding frame data input for an instructed number of target frames.
(4) The transmission apparatus according to (2) or (3), in which
the video encoder performs encoding on frame data to be first output to the transmission processing unit after a target frame of the delay decrease processing such that frame data that is a frame before the target frame of the delay decrease processing and has been output to the transmission processing unit is a reference destination of inter-frame reference.
(5) The transmission apparatus according to any of (2) to (4), in which
the video encoder encodes frame data to be first output to the transmission processing unit after a target frame of the delay decrease processing such that frame data last output to the transmission processing unit before the delay decrease processing is a reference destination of inter-frame reference.
(6) The transmission apparatus according to any of (2) to (5), in which
a time stamp value of frame data first output to the transmission processing unit after a target frame of the delay decrease processing by the video encoder is a value advanced by

$$\{(\text{number of target frames of delay decrease processing}) + 1\} \times (\text{frame interval time})$$

from a time stamp value of frame data last output to the transmission processing unit before the delay decrease processing.
(7) The transmission apparatus according to any of (2) to (6), in which

in a case where a number of frames output from the video encoder from a time point at which the transmission processing unit determines to decrease the encoding rate until the video encoder can output first frame data encoded accordingly is N, and

a ratio between a new encoding rate and an old encoding rate related to rate decrease is 1 : R,
the number of target frames is equal to or greater than ceiling($(R - 1) \times N$).

(8) The transmission apparatus according to any of (2), (4), (5), (6) and (7), in which
the video encoder performs processing of outputting frame data including reference information and not including image data for an instructed number of target frames as the delay decrease processing.
(9) The transmission apparatus according to (1), in which

the transmission processing unit transmits an encoding rate decrease request to the video encoder,
the video encoder decreases the encoding rate in response to the encoding rate decrease request, and
the transmission processing unit performs processing of not transmitting to a reception-side device but discarding the frame data of the number of target frames among the frame data output from the video encoder as the delay decrease processing.

(10) The transmission apparatus according to (9), in which

the video encoder adds rate change information to frame data to be first encoded after a change in encoding rate, and
the transmission processing unit discards the frame data input from the video encoder before the frame data to which the rate change information is added is input after the transmission of the encoding rate decrease request.

(11) The transmission apparatus according to (9) or (10), in which

the transmission processing unit transmits frame identification information of frame data already transmitted to the reception-side device before execution of the delay decrease processing to the video encoder, and
the video encoder performs encoding on the frame data to be first output to the transmission processing unit after the encoding rate is decreased in response to the encoding rate decrease request such that frame data indicated by the frame identification information is a reference destination of inter-frame reference.

(12) The transmission apparatus according to (11), in which
the frame identification information includes frame identification information of last frame data transmitted to the reception-side device before execution of the delay decrease processing.
(13) The transmission apparatus according to any of (9) to (12), in which
a time stamp value of frame data first transmitted after a target frame of the delay decrease processing by the transmission processing unit is a value advanced by

```
{(number of target frames of delay decrease processing) + 1} × (frame interval time)
```

from a time stamp value of frame data last transmitted before the delay decrease processing.
(14) The transmission apparatus according to (11) or (12), in which
in a case where the frame data indicated by the frame identification information cannot be the reference destination of the inter-frame reference, the video encoder performs encoding such that the frame data to be first output to the transmission processing unit after the encoding rate is decreased in response to the encoding rate decrease request is an IDR frame.
(15) The transmission apparatus according to (14), in which
the video encoder sets the encoding rate to be lower than a rate designated by the encoding rate decrease request and suppresses a data size of the IDR frame to be transmitted within a predetermined maximum size.
(16) The transmission apparatus according to any of (9) to (15), in which

the video encoder includes memory that can temporarily store encoded frame data, and
the frame data to be first output to the transmission processing unit after the encoding rate is decreased in response to the encoding rate decrease request is encoded using the frame data stored in the memory as a reference destination.

(17) The transmission apparatus according to any of (9) to (16), in which

the video encoder periodically outputs a long-time reference frame, and

the frame data to be first output to the transmission processing unit after the encoding rate is decreased in response to the encoding rate decrease request is encoded using the long-time reference frame as a reference destination.

(18) The transmission apparatus according to (17), in which

in a case where the long-time reference frame is determined to be discarded by the transmission processing unit, the video encoder

sets, as an IDR frame, frame data to be first output to the transmission processing unit after the encoding rate is decreased in response to the encoding rate decrease request.

(19) The transmission apparatus according to (18), in which
the video encoder sets the encoding rate to be lower than a rate designated by the encoding rate decrease request and suppresses a data size of the IDR frame to be transmitted within a predetermined maximum size.
(20) A transmission method including:
performing rate decrease control on an encoding rate in a video encoder during transmission processing of image data encoded by the video encoder and executing delay decrease processing of decreasing a delay amount of transmission data for frame data of one or a plural number of target frames.

REFERENCE SIGNS LIST

1 Imaging apparatus
2 Transmission unit
3 Reception-side device
4 Network
5 Reception unit
21 Video capture unit
22 CPU
23 Packet transmission module
24 Video encoder
25 Memory
26 Network interface unit
27 Bus
32 Imaging unit
33 Image signal processing unit
34 Storage unit
35 Control unit
36 Operation unit
38 Display control unit
39 Display unit
51 Network interface unit
52 Packet reception module
53 Video decoder
54 Video renderer

**Claims**

1. A transmission apparatus comprising:

a video encoder that performs encoding for each piece of frame data of an image; and
a transmission processing unit that performs rate decrease control on an encoding rate in the video encoder during transmission processing of image data encoded by the video encoder and executes delay decrease processing of decreasing a delay amount of transmission data for frame data of one or a plural number of target frames.

2. The transmission apparatus according to claim 1, wherein

   the transmission processing unit transmits an encoding rate decrease request and the number of target frames of the delay decrease processing to the video encoder, and
   the video encoder decreases the encoding rate in response to the encoding rate decrease request and performs processing of not outputting the frame data of the number of target frames to the transmission processing unit as the delay decrease processing.

3. The transmission apparatus according to claim 2, wherein
   the video encoder performs, as the delay decrease processing, processing of not encoding but discarding frame data input for an instructed number of target frames.

4. The transmission apparatus according to claim 2, wherein
   the video encoder performs encoding on frame data to be first output to the transmission processing unit after a target frame of the delay decrease processing such that frame data that is a frame before the target frame of the delay decrease processing and has been output to the transmission processing unit is a reference destination of inter-frame reference.

5. The transmission apparatus according to claim 2, wherein
   the video encoder encodes frame data to be first output to the transmission processing unit after a target frame of the delay decrease processing such that frame data last output to the transmission processing unit before the delay decrease processing is a reference destination of inter-frame reference.

6. The transmission apparatus according to claim 2, wherein
   a time stamp value of frame data first output to the transmission processing unit after a target frame of the delay decrease processing by the video encoder is a value advanced by

$$\{(\text{number of target frames of delay decrease}$$
$$\text{processing}) + 1\} \times (\text{frame interval time})$$

   from a time stamp value of frame data last output to the transmission processing unit before the delay decrease processing.

7. The transmission apparatus according to claim 2, wherein

   in a case where a number of frames output from the video encoder from a time point at which the transmission processing unit determines to decrease the encoding rate until the video encoder can output first frame data encoded accordingly is N, and
   a ratio between a new encoding rate and an old encoding rate related to rate decrease is 1 : R,
   the number of target frames is equal to or greater than ceiling((R - 1) $\times$ N).

8. The transmission apparatus according to claim 2, wherein
   the video encoder performs processing of outputting frame data including reference information and not including image data for an instructed number of target frames as the delay decrease processing.

9. The transmission apparatus according to claim 1, wherein

   the transmission processing unit transmits an encoding rate decrease request to the video encoder,
   the video encoder decreases the encoding rate in response to the encoding rate decrease request, and
   the transmission processing unit performs processing of not transmitting to a reception-side device but discarding the frame data of the number of target frames among the frame data output from the video encoder as the delay decrease processing.

10. The transmission apparatus according to claim 9, wherein

    the video encoder adds rate change information to frame data to be first encoded after a change in encoding rate, and

the transmission processing unit discards the frame data input from the video encoder before the frame data to which the rate change information is added is input after the transmission of the encoding rate decrease request.

11. The transmission apparatus according to claim 9, wherein

the transmission processing unit transmits frame identification information of frame data already transmitted to the reception-side device before execution of the delay decrease processing to the video encoder, and
the video encoder performs encoding on the frame data to be first output to the transmission processing unit after the encoding rate is decreased in response to the encoding rate decrease request such that frame data indicated by the frame identification information is a reference destination of inter-frame reference.

12. The transmission apparatus according to claim 11, wherein
the frame identification information includes frame identification information of last frame data transmitted to the reception-side device before execution of the delay decrease processing.

13. The transmission apparatus according to claim 9, wherein
a time stamp value of frame data first transmitted after a target frame of the delay decrease processing by the transmission processing unit is a value advanced by

```
{(number of target frames of delay decrease
processing) + 1} × (frame interval time)
```

from a time stamp value of frame data last transmitted before the delay decrease processing.

14. The transmission apparatus according to claim 11, wherein
in a case where the frame data indicated by the frame identification information cannot be the reference destination of the inter-frame reference, the video encoder performs encoding such that the frame data to be first output to the transmission processing unit after the encoding rate is decreased in response to the encoding rate decrease request is an IDR frame.

15. The transmission apparatus according to claim 14, wherein
the video encoder sets the encoding rate to be lower than a rate designated by the encoding rate decrease request and suppresses a data size of the IDR frame to be transmitted within a predetermined maximum size.

16. The transmission apparatus according to claim 9, wherein

the video encoder includes memory that can temporarily store encoded frame data, and
the frame data to be first output to the transmission processing unit after the encoding rate is decreased in response to the encoding rate decrease request is encoded using the frame data stored in the memory as a reference destination.

17. The transmission apparatus according to claim 9, wherein

the video encoder periodically outputs a long-time reference frame, and
the frame data to be first output to the transmission processing unit after the encoding rate is decreased in response to the encoding rate decrease request is encoded using the long-time reference frame as a reference destination.

18. The transmission apparatus according to claim 17, wherein

in a case where the long-time reference frame is determined to be discarded by the transmission processing unit, the video encoder
sets, as an IDR frame, frame data to be first output to the transmission processing unit after the encoding rate is decreased in response to the encoding rate decrease request.

**19.** The transmission apparatus according to claim 18, wherein
the video encoder sets the encoding rate to be lower than a rate designated by the encoding rate decrease request and suppresses a data size of the IDR frame to be transmitted within a predetermined maximum size.

**20.** A transmission method comprising:
performing rate decrease control on an encoding rate in a video encoder during transmission processing of image data encoded by the video encoder and executing delay decrease processing of decreasing a delay amount of transmission data for frame data of one or a plural number of target frames.

# FIG. 1

A

RECEPTION-SIDE DEVICE

4

2

1

3

B

RECEPTION-SIDE DEVICE

2

1

3

# FIG. 2

# FIG. 3

EP 4 072 133 A1

*FIG. 4*

RECEPTION UNIT — 3

VIDEO RENDERER 54 → VRX
VIDEO DECODER 53
PACKET TRANSMISSION MODULE 52
NETWORK INTERFACE UNIT 51
5

CPK / VDPK — 4

TRANSMISSION UNIT — 1

VIDEO CAPTURE UNIT 21
VIDEO ENCODER 24
PACKET TRANSMISSION MODULE 23
NETWORK INTERFACE UNIT 26
2

Vin

## FIG. 5

COMPARATIVE EXAMPLE

t0

t1

DETERMINATION OF RATE DECREASE
BY PACKET TRANSMISSION MODULE

ARRIVAL OF RATE DECREASE
REQUEST AT ENCODER

FRAME SIZE

OUTPUT FRAME FROM
VIDEO ENCODER

F1  F2  F3  F4  F5  F6

TIME

TRANSMISSION
RATE

DATA TRANSMISSION OF
PACKET TRANSMISSION
MODULE

F1  F2  F3  F4  F5  F6

TIME

EP 4 072 133 A1

## FIG. 6

FIRST EMBODIMENT

t0

t1

DETERMINATION OF RATE DECREASE
BY PACKET TRANSMISSION MODULE

ARRIVAL OF RATE DECREASE
REQUEST AT ENCODER

FRAME SIZE

OUTPUT FRAME FROM
VIDEO ENCODER

F1　F2　F3　F4

DISCARD

F5　F6　F7　F8

TIME

TRANSMISSION
RATE

DATA TRANSMISSION OF
PACKET TRANSMISSION
MODULE

F1　F2　F3　F4　F8

TIME

EP 4 072 133 A1

# FIG. 7

PROCESSING OF PACKET TRANSMISSION MODULE

PERFORM PACKET TRANSMISSION OF INPUT FRAME/
RECEPTION OF CONTROL PACKET — S101

HAS TRANSMISSION ENDED? — S102 — Yes → END

No

DETERMINE CONTROL PACKET — S103

No ← IS RATE DECREASE NECESSARY? — S104

Yes

SET TRANSMISSION RATE/ENCODING RATE — S105

CALCULATE NUMBER OF TARGET FRAMES
OF DELAY DECREASE PROCESSING — S106

TRANSMIT
⌐· RATE DECREASE REQUEST
∟· NUMBER OF TARGET FRAMES
TO VIDEO ENCODER — S107

CHANGE TRANSMISSION RATE — S108

# FIG. 8

PROCESSING OF VIDEO ENCODER

ENCODE/OUTPUT INPUT FRAME · S201

HAS ENCODING ENDED? — Yes · S202 → END

No

No — HAS RATE DECREASE BEEN REQUESTED? · S203

Yes

CHANGE ENCODING SETTING · S204

PERFORM DELAY DECREASE PROCESSING · S205

HAS TARGET FRAME OF DELAY DECREASE PROCESSING BEEN ENDED? — Yes · S206

No

SET REFERENCE FRAME · S207

# FIG. 9

SECOND EMBODIMENT

t0    t1

DETERMINATION OF RATE DECREASE
BY PACKET TRANSMISSION MODULE

ARRIVAL OF RATE DECREASE
REQUEST AT ENCODER

FRAME SIZE

SKIP FRAME OUTPUT

OUTPUT FRAME FROM
VIDEO ENCODER

F1    F2    F3    F4    F5    F6    F7    F8

TIME

TRANSMISSION
RATE

DATA TRANSMISSION OF
PACKET TRANSMISSION
MODULE

F1    F2    F3    F4    F8

TIME

F5    F6    F7

EP 4 072 133 A1

# FIG. 10

ADDITIONAL INFORMATION

ECB

IMAGE DATA

# FIG. 11

THIRD EMBODIMENT

t10     t11     t12

DETERMINATION OF RATE DECREASE
BY PACKET TRANSMISSION MODULE

ARRIVAL OF RATE
DECREASE REQUEST
AT ENCODER

FRAME SIZE

OUTPUT FRAME FROM
VIDEO ENCODER

F1    F2    F3    F4    F5    F6

TIME

DISCARD   DISCARD   DISCARD

TRANSMISSION
RATE

DATA TRANSMISSION OF
PACKET TRANSMISSION
MODULE

F1      F5    F6

TIME

EP 4 072 133 A1

# FIG. 12

EP 4 072 133 A1

THIRD EMBODIMENT

t10　　　t11　　　t12　　TIME

PROCESSING OF PACKET TRANSMISSION MODULE { CALCULATION OF TRANSMISSION RATE AND ENCODING RATE

DELAY IN OS ON CPU OR BUS AND IN OS IN VIDEO ENCODER { TRANSMISSION OF ENCODING RATE DECREASE REQUEST AND ID OF FRAME TRANSMITTED BEFORE DISCARDING

ENCODING RATE SETTING

FRAME INTERVAL TIME

| FRAME F1 INPUT | FRAME F2 INPUT | FRAME F3 INPUT | FRAME F4 INPUT | FRAME F5 INPUT |

PROCESSING IN VIDEO ENCODER {

| ENCODING PROCESSING | ENCODING PROCESSING | ENCODING PROCESSING | ENCODING PROCESSING | ENCODING PROCESSING |

OUTPUT [F1]　[F2]　[F3]　[F4]　[F5]

M=3

MEMORY (HOLDING M+1 FRAMES) [F1] [F2] [F3] [F4]

DISCARDED BY PACKET TRANSMISSION MODULE

# FIG. 13

PROCESSING OF PACKET TRANSMISSION MODULE

```
        PERFORM PACKET TRANSMISSION OF INPUT FRAME/    S101
            RECEPTION OF CONTROL PACKET

                                            Yes
              HAS TRANSMISSION ENDED?
                                          S102                 END
                    No

               DETERMINE CONTROL PACKET    S103

         No
              IS RATE DECREASE NECESSARY?    S104
                        Yes

            SET TRANSMISSION RATE/ENCODING RATE    S105

        TRANSMIT
         ⌈· RATE DECREASE REQUEST
         ⌊· FRAME ID TRANSMITTED BEFORE DISCARDING    S107A
        TO VIDEO ENCODER

              CHANGE TRANSMISSION RATE    S108

        Yes
              HAS RATE DECREASED FRAME BEEN INPUT?   S110
                        No

                DISCARD FRAME    S111
```

# FIG. 14

PROCESSING OF VIDEO ENCODER

ENCODE/OUTPUT INPUT FRAME — S201

STORE ENCODED FRAME — S210

HAS ENCODING ENDED? — Yes S202

No

HAS RATE DECREASE BEEN REQUESTED? — No / S203

Yes

END

CHANGE ENCODING SETTING — S211

SET ADDITIONAL INFORMATION AND SET REFERENCE FRAME — S212

EP 4 072 133 A1

# FIG. 15

OUTPUT FRAME FROM VIDEO ENCODER

IDR

LTR

LTR

IDR

F1  F2  F3  F4  F5  F6  F7  F8  F9  F10  F11  F12  F13

TIME

FIG. 16

FOURTH EMBODIMENT

t10    t11    t12

TIME

PROCESSING OF PACKET
TRANSMISSION MODULE

CALCULATION OF TRANSMISSION RATE AND ENCODING RATE

DELAY IN OS ON CPU OR BUS
AND IN OS IN VIDEO ENCODER

TRANSMISSION OF ENCODING RATE
DECREASE REQUEST AND ID OF FRAME
TRANSMITTED BEFORE DISCARDING

ENCODING RATE
SETTING

FRAME INTERVAL

FRAME INPUT    FRAME INPUT    FRAME INPUT    FRAME INPUT    FRAME INPUT

PROCESSING IN VIDEO ENCODER

ENCODING PROCESSING    ENCODING PROCESSING    ENCODING PROCESSING    ENCODING PROCESSING    ENCODING PROCESSING

F1    F2    F3    F4    F5

DISCARDED BY PACKET TRANSMISSION MODULE

MEMORY: HOLDING LTR FRAME    F1

EP 4 072 133 A1

# FIG. 17

PROCESSING OF VIDEO ENCODER

ENCODE/OUTPUT INPUT FRAME — S201

STORE LTR FRAME — S210A

HAS ENCODING ENDED? — Yes → S202 → END

No

HAS RATE DECREASE BEEN REQUESTED? — No (loop back) / S203

Yes

CHANGE ENCODING SETTING — S211

HAS IDR FRAME OUTPUT BEEN REQUESTED BEFORE FRAME OUTPUT AT NEW RATE? — Yes → S222

No

IS ID OF LTR FRAME OUTPUT LAST LARGER THAN NOTIFIED ID? — No / S223

Yes

SET FIRST FRAME OF NEW RATE AS P FRAME REFERRING TO LTR FRAME — S224

SET FIRST FRAME OF NEW RATE AS IDR FRAME — S225

**INTERNATIONAL SEARCH REPORT**

| International application No. |
| --- |
| PCT/JP2020/043894 |

**A. CLASSIFICATION OF SUBJECT MATTER**
Int.Cl. H04N19/115(2014.01)i, H04N19/132(2014.01)i, H04N19/164(2014.01)i,
H04N19/172(2014.01)i, H04N19/587(2014.01)i, H04N21/2343(2011.01)i,
H04N21/24(2011.01)i
FI: H04N19/115, H04N19/172, H04N19/164, H04N21/2343, H04N21/24,
H04N19/587, H04N19/132
According to International Patent Classification (IPC) or to both national classification and IPC

**B. FIELDS SEARCHED**

Minimum documentation searched (classification system followed by classification symbols)
Int.Cl. H04N19/00-19/98, H04N21/00-21/858

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2014-155084 A (MITSUBISHI ELECTRIC CORPORATION) 25 August 2014 (2014-08-25), paragraphs [0058]- [0085], fig. 5, 6, entire text | 1-5, 8-9, 16-17, 20 |
| Y | | 6, 13 |
| A | | 7, 10-12 14-15, 18-19 |
| Y | JP 10-304360 A (MATSUSHITA ELECTRIC INDUSTRIAL CO., LTD.) 13 November 1998 (1998-11-13), [0434] | 6, 13 |
| A | JP 10-70727 A (SANYO ELECTRIC CO., LTD.) 10 March 1998 (1998-03-10), entire text | 1-20 |
| A | JP 2009-524328 A (NXP BV) 25 June 2009 (2009-06-25), entire text | 1-20 |
| A | US 2019/0244029 A1 (ZHEJIANG DAHUA TECHNOLOGY CO., LTD.) 08 August 2019 (2019-08-08), entire text | 1-20 |

☐ Further documents are listed in the continuation of Box C. ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 January 2021 | 09 February 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

International application No.

PCT/JP2020/043894

```
JP 2014-155084 A   25 August 2014      (Family: none)

JP 10-304360 A     13 November 1998    US 6353703 B1
                                       column 77, lines 18-37
                                       EP 837608 A2
                                       KR 10-1998-0032861 A
                                       CN 1199893 A

JP 10-70727 A      10 March 1998        EP 814612 A2
                                        entire text
                                        CN 1170297 A

JP 2009-524328 A   25 June 2009         US 2009/0016435 A1
                                        entire text
                                        WO 2007/083279 A2
                                        EP 1980108 A2
                                        CN 101371588 A

US 2019/0244029 A1 08 August 2019       WO 2018/072675 A1
                                        EP 3513563 A4
                                        CN 106454432 A
```

Form PCT/ISA/210 (patent family annex) (January 2015)

## REFERENCES CITED IN THE DESCRIPTION

**Patent documents cited in the description**

- JP 2003023639 A

**Non-patent literature cited in the description**

- Evaluation of error resilience mechanisms for 3G conversational video. *2008 Tenth IEEE International Symposium on Multimedia,* 2008
- H.264/AVC in Wireless Environments. *IEEE Trans. on Circuits and Systems for Video Technology,* 2003
- Experimental Investigation of the Google Congestion Control for Real-Time Flows. *ACM SIGCOMM,* 2013
- Self-Clocked Rate Adaptation for Multimedia. *IETF RFC 8298,* 2017
- RTP: A Transport Protocol for Real-Time Applications. *IETF RFC 3550,* 2003